# EUROPEAN PATENT APPLICATION

(11) **EP 1 830 273 A1**
(43) Date of publication of application: **05.09.2007**
(21) Application number: 05799882.5
(22) Date of filing: 07.11.2005
(51) Int. Cl.: G06F 12/14, G06F 11/00, G06F 21/22

(54) **CONFIDENTIAL INFORMATION PROCESSING DEVICE**

(30) Priority: 11.11.2004 JP 2004328200
(71) Applicant: MATSUSHITA ELECTRIC INDUSTRIAL CO., LTD., Osaka 571-8501 (JP)
(72) Inventor: NEMOTO, Yusuke, Chuo-ku, Osaka-shi, Osaka 540-6319 (JP); TORISAKI, Yuishi, Chuo-ku, Osaka-shi, Osaka 540-6319 (JP); FUJIWARA, Makoto, Chuo-ku, Osaka-shi, Osaka 540-6319 (JP)
(74) Representative: Crawford, Andrew Birkby
(86) International application number: PCT/JP2005/020373
(87) International publication number: WO 2006/051754

(57) **Abstract**

A secret information processing apparatus including: a control unit 102 storing access control levels assigned to resources in the apparatus and used as a standard in judging whether to permit an access to any resource from any external apparatus; a secret information storage unit 105 storing an update target program; and an internal CPU 103 that performs an update process for updating the update target program if an update request is received. The control unit 102 determines whether to permit accesses to the resources from the external apparatus, in accordance with the access control levels. The internal CPU 103 changes, during the update process, access control levels of resources, which are to be accessed by the update unit during the update process and whose access control levels indicate that accesses are permitted, to levels indicating that accesses are not permitted.

## Description

### Technical Field

The present invention relates to a technology for a secret information processing program for use in a secret information processing apparatus.

### Background Art

In a system for dealing with contents that need copyright protection, it is necessary to protect secret information, such as keys used for decrypting the contents and the decrypted contents, from leaking. For example, Document 1 discloses a technology for protecting the secret information from leaking. Provided in this technology is a secret information processing apparatus that includes a dedicated CPU that deals with the secret information, a memory storing therein secret information such as a key and a program executed by the dedicated CPU, and an encryption calculation circuit, where a CPU that controls the entire system is restricted from accessing the secret information and the program executed by the dedicated CPU.

With such a structure, the security level within the apparatus is improved, and it is possible to effectively prevent unauthorized execution of the contents.
Document 1: Japanese Patent Application Publication No. 2004-96666

### Disclosure of the Invention

### The Problems the Invention Is Going to Solve

The above-mentioned conventional technology, however, has a problem that, since the program executed by the dedicated CPU cannot be updated by an access from outside, it is impossible to update, as necessary, the functions of the secret information processing apparatus after a system incorporating the secret information processing apparatus is shipped as a product.
It is therefore an obj ect of the present invention to provide a secret information processing apparatus whose functions can be modified as necessary, with the secret information being effectively prevented from leaking.

### Means to Solve the Problems

The above-statedobject is fulfilled by a secret information processing apparatus for controlling accesses to resources therein from external apparatuses, the secret information processing apparatus comprising: a level storage unit storing access control levels that are assigned to the resources and are used as a standard in judging whether or not to permit an access to any of the resources from any of the external apparatuses; a program storage unit storing anupdate target program; a receiving unit operable to receive, from one of the external apparatuses, a request to update the update target program; an update unit operable to perform an update process for updating the update target program if the receiving unit receives the request; an access control unit operable to determine whether or not to permit accesses to the resources from the external apparatus, in accordance with the access control levels corresponding to the resources; and a level changing unit operable to change, during the update process performed by the update unit, access control levels of resources, which are to be accessed by the update unit during the update process and whose access control levels indicate that accesses from the external apparatus are permitted, to levels indicating that accesses from the external apparatus are not permitted.

The above-stated object is also fulfilled by a secret information processing method for use in a secret information processing apparatus for controlling accesses to resources therein from external apparatuses, the secret information processing apparatus including: a level storage unit storing access control levels that are assigned to the resources and are used as a standard in judging whether or not to permit an access to any of the resources from any of the external apparatuses; and a program storage unit storing an update target program, the secret information processing method comprising the steps of: receiving, from one of the external apparatuses, a request to update the update target program; performing an update process for updating the update target program if the request is received; determining whether or not to permit accesses to the resources from the external apparatus, in accordance with the access control levels corresponding to the resources; and changing, during the update process performed by the update unit, access control levels of resources, which are to be accessed by the update unit during the update process and whose access control levels indicate that accesses from the external apparatus are permitted, to levels indicating that accesses from the external apparatus are not permitted.

The above-stated object is also fulfilled by a program for causing a secret information processing apparatus, which controls accesses to resources therein from external apparatuses, to perform a secret information process, the secret information processing apparatus including: a level storage unit storing access control levels that are assigned to the resources and are used as a standard in judging whether or not to permit an access to any of the resources from any of the external apparatuses; and a program storage unit storing an update target program, the secret information process comprising the steps of: receiving, from one of the external apparatuses, a request to update the update target program; performing an update process for updating the update target program if the request is received; determining whether or not to permit accesses to the resources from the external apparatus, in accordance with the access control levels corresponding to the resources; and changing, during the update process performed by the update unit, access control levels of resources, which are to be accessed by the update unit during the update process and whose access control levels indicate that accesses from the external apparatus are permitted, to levels indicating that accesses from the external apparatus are not permitted.

The above-stated object is also fulfilled by a computer-readable recording medium recording therein a program for causing a secret information processing apparatus, which controls accesses to resources therein from external apparatuses, to perform a secret information process, the secret information processing apparatus including: a level storage unit storing access control levels that are assigned to the resources and are used as a standard in judging whether or not to permit an access to any of the resources from any of the external apparatuses; and a program storage unit storing an update target program, the secret information process comprising the steps of: receiving, from one of the external apparatuses, a request to update the update target program; performing an update process for updating the update target program if the request is received; determining whether or not to permit accesses to the resources from the external apparatus, in accordance with the access control levels corresponding to the resources; and changing, during the update process performed by the update unit, access control levels of resources, which are to be accessed by the update unit during the update process and whose access control levels indicate that accesses from the external apparatus are permitted, to levels indicating that accesses from the external apparatus are not permitted.

### Effects of the Invention

With the above-described structure, it is possible to restrict the accesses from the external apparatus while the update process is performed. Accordingly, it is possible to modify the functions of the secret information processing apparatus as necessary from outside, while effectively preventing the secret information from leaking.
In the above-stated secret information processing apparatus, the level changing unit may return the access control levels that were changed during the update process, to the access control levels before the change, after the update process.

With the above-described structure in which the restriction on the access from outside is loosened after the update process, it is possible to maintain normal accesses from outside while the secret information processing apparatus is performing a process other than the update process.
In the above-stated secret information processing apparatus, each access control level may be represented by a rank, the secret information processing apparatus further comprising a level receiving unit operable to receive an access control level assigned to the external apparatus, from the external apparatus, if a rank indicated by the received access control level is equal to or higher than a rank indicated by an access control level of a resource, the access control unit permits the external apparatus to access the resource, and if the rank indicated by the received access control level is lower than the rank indicated by the access control level of the resource, the access control unit does not permit the external apparatus to access the resource.

With the above-described structure, it is possible to set the access control level depending on the required secrecy level of the internal resource. It is accordingly possible to achieve a flexible and meticulous access control in which, for example, accesses to resources having high secrecy from outside are mainly restricted, and accesses to resources having low secrecy from outside are easily permitted.
In the above-stated secret information processing apparatus, the receiving unit may be one of the resources, and receives the update request only if the access control unit permits the external apparatus to access the receiving unit.

With the above-described structure, it is possible to restrict external apparatuses from which the update request is received, to predetermined external apparatuses. It is accordingly possible to effectively prevent the limitless reception of the update request from the external apparatuses and prevent wasteful executions of the update process.
The above-stated secret information processing apparatus may further comprise an upper limit value storage unit storing an upper limit value of the ranks, and if the rank indicated by the received access control level of the external apparatus is higher than the upper limit value, the access control unit does not permit the external apparatus to access any of the resources.

The above-stated secret information processing apparatus may further comprise an upper limit value storage unit storing an upper limit value of the ranks, and if the rank indicated by the received access control level of the external apparatus is higher than the upper limit value, the access control unit judges whether or not to permit the external apparatus to access any of the resources by regarding the rank indicated by the received access control level as equivalent with the upper limit value.

With the above-described structure, it is possible to restrict the access control levels that permit the external apparatuses to access the resources. Accordingly, even if the access control level of an external apparatus is set to indicate a high rank by an unauthorized operation, it is possible to reject accesses from the external apparatus effectively.
The above-stated secret information processing apparatus may further comprise an authentication unit operable to perform an authentication of the external apparatus, and if the authentication unit does not confirm an authenticity of the external apparatus through the authentication, the access control unit does not permit the external apparatus to access any of the resources.

With the above-described structure, it is possible to reject accesses from an unauthenticated external apparatus. It is accordingly possible to prevent unauthorized accesses from external apparatuses effectively.
The above-stated secret information processing apparatus may further comprise a decryption unit operable to receive, from the external apparatus, an encrypted update program for the update target program, and decrypt the received encrypted update program to generate an update program, the decryption unit includes a data output sub-unit that is one of the resources that may be changed by the level changing unit, and is operable to output the update program generated by the decryption unit, and the update unit performs the update process by accessing the data output sub-unit to receive the update program, and storing the received update program in the program storage unit.

With the above-described structure, accesses to the data output sub-unit, which outputs the update program after the decryption, are restricted while the update process is executed. It is therefore possible to maintain the security when the secret information is input from outside.
In the above-stated secret information processing apparatus, the program storage unit may include a program storage sub-unit and a save sub-unit, the program storage sub-unit stores the update target program and a context of the update target program, the update unit includes: a take-over judging unit operable to judge whether or not the update program should take over the context of the update target program; a save unit operable to save the context of the update target program into the save sub-unit if the take-over judging unit judges that the update program should take over the context; and a hash value calculating unit operable to calculate a hash value of the update target program, wherein the decryption unit further receives an encrypted hash value that is generated by encrypting the hash value of the update target program, decrypts the received encrypted hash value, and outputs a hash value generated by decrypting the encrypted hash value, to the data output sub-unit, and the update unit receives the hash value, generated by the decryption unit, of the update target program from the data output sub-unit, and stores the update program and the context of the update target program in the program storage sub-unit only if the received hash value matches the calculated hash value.

In the above-stated secret information processing apparatus, the update unit may further deletes the context of the update target program from the save sub-unit if the received hash value of the update target program does not match the calculated hash value of the update target program.
With the above-described structure, it is possible to judge whether or not the update program input from the external apparatus can take over the context of the update target program, based on the hash value of the update target program. It is accordingly possible to effectivelyprevent an unauthorized use of the context.

In the above-stated secret information processing apparatus, the decryption unit may further receive, from the external apparatus, an encrypted hash value that is generated by encrypting a hash value of the update program, decrypts the received encrypted hash value, and outputs a hash value generated by decrypting the encrypted hash value, to the data output sub-unit,
the hash value calculating unit further calculates a hash value of the update program if a hash value of the received update target program matches the calculated hash value of the update target program, and the update unit receives the hash value, generated by the decryption unit, of the update program from the data output sub-unit, and stores the update program and the context of the update target program in the program storage sub-unit only if the received hash value of the update program matches the calculated hash value of the update program.

In the above-stated secret informationprocessing apparatus, the update unit may further delete the update program from the program storage unit if the received hash value of the update program does not match the calculated hash value of the update program.
With the above-described structure, it is possible to receive the update program after it is confirmed based on the hashvalue that the update program input from the external apparatus has not been tampered with. It is accordingly possible to prevent a tampered program from being stored in the secret information processing apparatus.

In the above-stated secret information processing apparatus, the program storage unit may include a program storage sub-unit and a save sub-unit, the program storage sub-unit stores the update target program and a context of the update target program, the save sub-unit stores a multiple generation hash value that is calculated based on hash values of each of a plurality of updated programs having been updated starting from an initial program up to the update target program, the update unit includes: a take-over judging unit operable to judge whether or not the update program should take over the context of the update target program; and a save unit operable to save the context of the update target program into the save sub-unit if the take-over judging unit judges that the update program should take over the context, wherein the decryption unit further receives, from the external apparatus, an encrypted hash value that is generated by encrypting a multiple generation hash value, decrypts the received encrypted hash value, and outputs a multiple generation hash value generated by decrypting the encrypted hash value, to the data output sub-unit, and the update unit receives, from the data output sub-unit, the multiple generation hash value generated by the decryption unit, and stores the update program and the context of the update target program in the program storage sub-unit only if the received multiple generation hash value matches the multiple generation hash value stored in the save sub-unit.

In the above-stated secret information processing apparatus, the update unit may further delete the context of the update target program from the save sub-unit if the received multiple generation hash value does not match the multiple generation hash value stored in the save sub-unit.
With the above-described structure, it is possible to judge whether or not the update program input from the external apparatus can take over the context of the program before the update, based on the multiple generation hash value. With this structure, the context cannot be used in an unauthorized manner by an update program input from outside by an unauthorized user, unless all the hash values of each updated program leak to outside. It is accordingly possible to effectively prevent an unauthorized take-over of the context.

In the above-stated secret information processing apparatus, the decryption unit may further receive an encrypted hash value that is generated by encrypting a hash value of the update program, decrypts the received encrypted hash value, and outputs a hash value generated by decrypting the encrypted hash value, to the data output sub-unit, and the update unit further calculates a hash value of the update program by performing a hash calculation on the update program if the received multiple generation hash value matches the multiple generation hash value stored in the save sub-unit, receives the hash value, generated by the decryption unit, of the update program from the data output sub-unit, and stores the update program and the context of the update target program in the program storage sub-unit only if the received hash value of the update program matches the calculated hash value of the update program.

In the above-stated secret information processing apparatus, the update unit may further delete the update program from the program storage unit if the received hash value of the update program does not match the calculated hash value of the update program.
With the above-described structure, it is possible to receive the update program after it is confirmed based on the hashvalue that the update program input from the external apparatus has not been tampered with. It is accordingly possible to prevent a tampered program from being stored in the secret information processing apparatus.

In the above-stated secret information processing apparatus, the update unit may further concatenate the multiple generation hash value stored in the save sub-unit with the calculated hash value of the update program to generate a concatenated value, calculates a multiple generation hash value by performing the hash calculation on the concatenated value, and replaces the multiple generation hash value stored in the save sub-unit with the calculated multiple generation hash value.
With the above-described structure, it is possible to update the multiple generation hash value when the update program takes over the context of the update target program. This enhances the protection force against an unauthorized take-over of the context from outside.

In the above-stated secret information processing apparatus, the program storage unit may further store a context of the update target program, the update unit includes: a take-over judging unit operable to judge whether or not the update program should take over the context of the update target program; an output judging unit operable to judge whether or not to output the context if the take-over judging unit judges that the update program should not take over the context; and a hash value calculating unit operable to calculate a hash value of the update target program if the output judging unit judges to output the context, the secret informationprocessing apparatus further comprising an encryption unit operable to encrypt the calculated hash value and the context,
wherein the update unit concatenates the encrypted hash value with the encrypted context to generate a concatenated encrypted hash value and context and outputs the concatenated encrypted hashvalue and context to outside the secret informationprocessing apparatus.

With the above-described structure, it is possible to temporarily save outside the context of the update target program that is not taken over by the update program, in correspondence with the hash value of the update target program. This makes it possible to easily confirm, based on the hash value, whether or not the context input from outside is the context of the update target program, when the secret information processing apparatus receives the context, which has been saved outside, to re-use the update target program.

In the above-stated secret information processing apparatus, the program storage unit may include a program storage sub-unit and a save sub-unit, the program storage sub-unit stores the update target program and a context of the update target program, the update unit includes: a take-over judging unit operable to judge whether or not the update program should take over the context of the update target program; a save judging unit operable to judge whether or not to save the context of the update target program into the save sub-unit if the take-over judging unit judges that the update program should not take over the context; a hash value calculating unit operable to calculate a hash value of the update target program if the save judging unit judges to save the context; and save unit operable to concatenate the hash value with the context to generate a concatenated hash value and context and saves the concatenated hash value and context into the save sub-unit.

With the above-described structure, it is possible to temporarily save, into the save sub-unit, the context of the update target program that is not taken over by the update program, in correspondence with the hash value of the update target program. This makes it possible to easily confirm, based on the hash value, whether or not the context input from the save sub-unit is the context of the update target program, when the secret information processing apparatus receives the context, which has been saved outside, to re-use the update target program.

In the above-stated secret informationprocessing apparatus, the decryption unit may further receive, from the external apparatus, an encrypted hash value of the update program and an encrypted context of the update program, and decrypts the received encrypted hash value and context to generate a hash value and a context, the update unit includes: a hash value calculating unit operable to calculate a hash value of the update program; and a hash value judging unit operable to judge whether or not the calculated hash value of the update program matches the hash value of the update program generated by the decryption unit,
wherein the update unit stores the context generated by the decryption unit into the program storage unit as the context of the update program if the hash value judging unit judges that the calculated hash value matches the hash value generated by the decryptionunit, and deletes the update program from the program storage unit if the hash value judging unit judges that the calculated hash value does not match the hash value generated by the decryption unit.

With the above-described structure in which the context input from outside is input in correspondence with the hash value, it is possible to easily confirm whether or not the input context is an authorized context of the update program. This makes it possible to effectively prevent the tampering of the secret information processing apparatus that is attempted by an unauthorized input of the context.
In the above-statedsecret information processing apparatus, the program storage unit may include a program storage sub-unit and a save sub-unit, the program storage sub-unit stores the update program, the save sub-unit stores a plurality of pieces of concatenated data each of which is generated by concatenating a context of an update program and a hash value of the update program, the update unit includes: a hash value calculating unit operable to calculate a hash value of the update program; and a concatenated data judging unit operable to judge whether or not a piece of concatenated data having a same hash value as the calculated hash value is stored in the save sub-unit, wherein if the concatenated data judging unit judges that the piece of concatenated data is stored, the update unit stores a context of an update program included in the piece of concatenated data, into the program storage sub-unit, and if the concatenated data judging unit judges that the piece of concatenated data is not stored, the update unit deletes the update program from the program storage sub-unit.

With the above-described structure, it is possible to confirm whether or not the update program input from outside is an update program for the context stored in the secret information processing apparatus, based on the hash value that is correlated with the context. This makes it possible to effectively prevent an unauthorized use of the context by an unauthorized input of the update program.
In the above-stated secret information processing apparatus, the program storage unit includes a program storage sub-unit and a save sub-unit, the program storage sub-unit stores the update target program and a context of the update target program, the save sub-unit stores a chain value that is indicated by an encrypted update target program, the update program is encrypted by using an encryption key and the chain value, the update unit includes: a take-over judging unit operable to judge whether or not the update program should take over the context of the update target program; and a save unit operable to save the context of the update target program into the save sub-unit if the take-over judging unit judges that the update program should take over the context, wherein the decryption unit further receives decrypts the update program received from the external apparatus, using the encryption key and the chain value stored in the save sub-unit, and outputs the decrypted update program to the data output sub-unit, and the update unit receives the decrypted update program from the data output sub-unit, and stores the received update program and the context of the update target program in the program storage sub-unit.

With the above-described structure, the update program that is to take over the context of the update target program is encrypted using both the encryption key and the chain value that is unique to the update target program, and is decrypted in the secret information processing apparatus by using the same encryption key and chain value. With this structure, an unauthorized user cannot input the update program from outside and cannot decrypt the input update program unless the unauthorized user knows both the encryption key and chain value. It is therefore possible to effectively prevent an unauthorized take-over of the context.

In the above-stated secret information processing apparatus, the program storage unit may include a bank storing the update target program and includes a bank storing an update program corresponding to the update target program, and the update unit performs the update process by switching between the banks included in the program storage unit.
In the above-stated secret information processing apparatus, the bank storing the update target program may store a context of the update target program, the receiving unit receives, as the update request, bank information which specifies a bank that is to be switched and stores the update program, the update unit includes: a take-over judging unit operable to judge whether or not the update program should take over the context of the update target program; and a bank switching unit operable to switch an access target bank included in the program storage unit, from the bank storing the update target program to the bank storing the update program, if the take-over judging unit judges that the update program should take over the context, wherein the update unit stores the context of the update target program into the bank to which the bank switching unit switched.

With the above-described structure, it is possible to easily execute the program update process from outside while the update program is stored inside. This makes it possible to execute the program update process from outside in a safe and reliable manner, without bringing out the secret information to outside.
In the above-stated secret information processing apparatus, the update target program may include take-over bank information that specifies a bank storing an update program that corresponds to the update target program and can take over the context of the update target program, the update unit includes a take-over bank judging unit operable to judge whether or not the bank specified by the received bank information matches the bank specified by the take-over bank information, wherein the bank switching unit switches the access target bank included in the program storage unit, from the bank storing the update target program to the bank storing the update program, if the take-over bank judging unit judges that the bank specified by the received bank information matches the bank specified by the take-over bank information.

With the above-described structure, it is possible to effectively prevent a bank from being switched by an unauthorized access from outside. This makes it possible to effectively prevent an execution of the update program by an unauthorized operation.
In the above-stated secret informationprocessing apparatus, each access control level may be represented by one of three or more ranks.

With the above-described structure, it is possible to control the accesses so that only predetermined external apparatuses can access the resources during the update process. And at the same time, it is possible to restrict the accesses to the predetermined resources in the secret information processing apparatus from outside. This makes it possible to control the accesses flexibly depending on the secrecy level.

### Brief Description of the Drawing

Fig. 1 is a functional block diagram showing the structure of a secret information processing apparatus 100 in Embodiment 1 of the present invention.
Fig. 2 is a flowchart showing the procedures of the access control process performed by the secret information processing apparatus 100.
Fig. 3 shows an example of the rank correspondence table before a change.
Fig. 4 is a flowchart showing the procedures of the program update process performed by the secret information processing apparatus 100.
Fig. 5 shows the rank correspondence table after the change.
Fig. 6 is a flowchart showing the procedures of the context take-over input process performed by the secret information processing apparatus 100.
Fig. 7 is a flowchart showing the procedures of the context take-over input process performed by the secret information processing apparatus 100.
Fig. 8 is a schematic diagram of a process of creating the encrypted first generation hash value.
Fig. 9 is a schematic diagram of a process of creating the encrypted concatenated hash value.
Fig. 10 is a flowchart showing the procedures of the context external output process performed by the secret information processing apparatus 100.
Fig. 11 is a flowchart showing the procedures of the context external input process performed by the secret information processing apparatus 100.
Fig. 12 is a flowchart showing the procedures of the context save process performed by the secret information processing apparatus 100.
Fig. 13 is a flowchart showing the procedures of the save context input process performed by the secret information processing apparatus 100.
Fig. 14 is a flowchart showing the procedures of the program update process performed by the secret information processing apparatus 150.
Fig. 15 is a flowchart showing the procedures of the program update process performed by the secret information processing apparatus 150.
Fig. 16 is a flowchart showing the procedures of the chain value generation process in which the secret information processing apparatus 150 stores a chain value in the save area 1053, and updates the stored chain value.
Fig. 17 is schematic diagram showing how the chain value is updated in accordance with the procedures shown in Fig. 16.
Fig. 18 is a flowchart showing the procedures of the context take-over input process performed by the secret information processing apparatus 150.
Fig. 19 is a flowchart showing the procedures of the context external input process performed by the secret information processing apparatus 150.
Fig. 20 is a flowchart showing the procedures of the save context input process performed by the secret information processing apparatus 150.
Fig. 21 is a functional block diagram showing the structure of a secret information processing apparatus 200.
Fig. 22 is a flowchart showing the procedures of the program update process performed by the secret information processing apparatus 200.
Fig. 23 is a flowchart showing the procedures of the context take-over input process performed by the secret information processing apparatus 200.
Fig. 24 shows an example of the rank correspondence table before the execution of the program update process.
Fig. 25 shows the structure of the calculation program storage area 1051.
Fig. 26 is a flowchart showing the procedures of the access control process performed by the secret information processing apparatus 200.

### Description of Characters

- 100, 200: secret information processing apparatus
- 101: external interface
- 102, 112: control unit
- 103: internal CPU
- 104: encryption calculation unit
- 105, 115: secret information storage unit
- 120, 121: external apparatus
- 1021: access control unit
- 1022: rank correspondence table storage unit
- 1023: upper limit rank storage unit
- 1024, 1124: program update request register
- 1041: data input unit
- 1042: calculation processing unit
- 1043: data output unit
- 1051: calculation program storage area
- 1052: update program storage area
- 1053: save area
- 1125: authentication unit
- 1201: CPU
- 1211: DSP

### Best Mode for Carrying Out the Invention

The best mode for carrying out the present invention will be described with reference to the attached drawings.

### <Embodiment 1>

### <Structure>

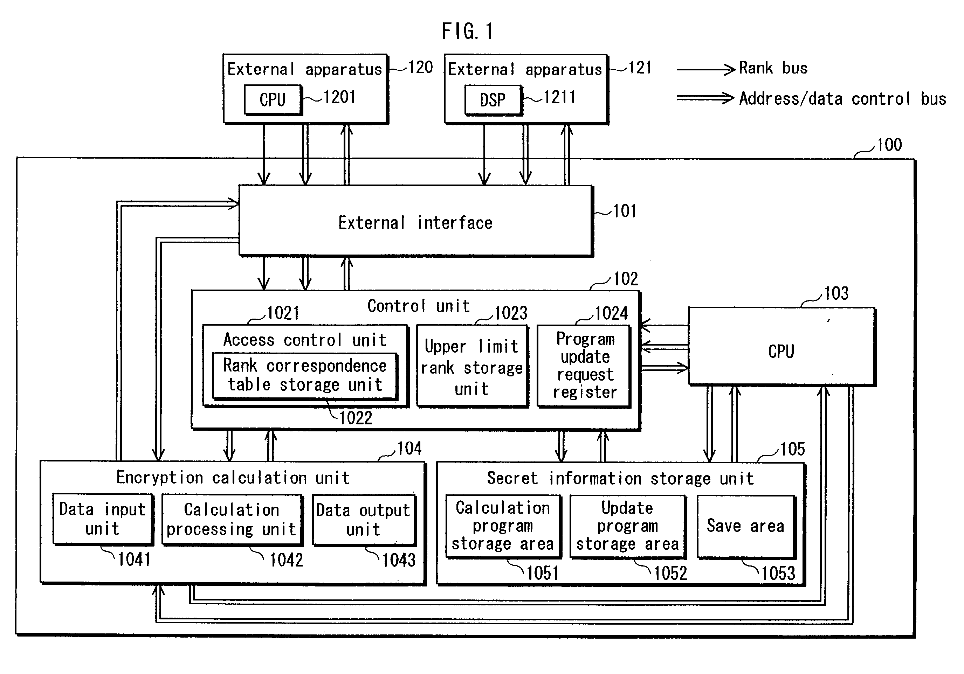

Fig. 1 is a functional block diagram showing the structure of a secret information processing apparatus 100 in Embodiment 1 of the present invention.

The secret information processing apparatus 100 includes an external interface 101, a control unit 102, an internal CPU 103, an encryption calculation unit 104, and a secret information storage unit 105. External apparatuses 120 and 121 are connected to the secret informationprocessing apparatus 100 via the external interface 101. The description of two external apparatuses being connected to the secret information processing apparatus 100 is provided for the sake of convenience. However, one external apparatus or three or more external apparatuses may be connected to the secret information processing apparatus 100.

The external interface 101 receives, from the external apparatuses 120 and 121, various types of data such as rank information, a post-update program, and a context used for the post-update program, and outputs the received data to the control unit 102.
The "rank information" is information indicating a rank that is used as a standard for determining whether or not to permit access to each resource in the secret information processing apparatus 100. The rank information is preliminarily set in the external apparatuses 120 and 121 and each resource in the secret information processing apparatus 100. When any of the external apparatuses 120 and 121 and the internal CPU 103 tries to access a resource in the secret information processing apparatus 100, it outputs the rank information to the control unit 102 via a dedicated bus shown in Fig. 1.

The definition of "rank information" also applies to secret information processing apparatuses 150 and 200 that will be described later.
The control unit 102 includes an access control unit 1021, an upper limit rank storage unit 1023, and a program update request register 1024.
The access control unit 1021 includes a rank correspondence table storage unit 1022 which stores a rank correspondence table. The access control unit 1021 controls, based on each piece of rank information output from the external apparatuses 120 and 121 and the internal CPU 103, accesses to resources in the secret information processing apparatus 100 that are requested by the external apparatuses 120 and 121 and the internal CPU 103.

More specifically, the access control unit 1021 refers to the rank correspondence table, which shows the correspondence between addresses of resources in the secret information processing apparatus 100 and ranks assigned to the resources, to detect the rank assigned to an access target resource, compares the detected rank with a rank indicated by the output rank information, and if the output rank is equal to or higher than the detected rank, permits an access to the access target resource, and if the output rank is lower than the detected rank, rejects an access to the access target resource.

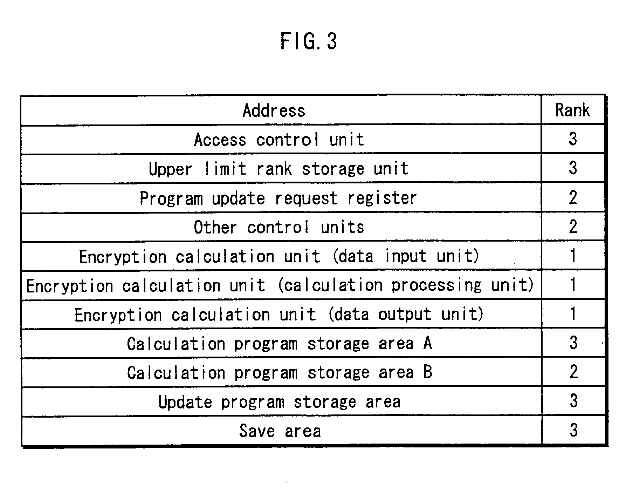

Fig. 3 shows an example of the rank correspondence table. In Fig. 3, for the sake of convenience, addresses are identified by names of resources. However, in the actuality, the rank correspondence table contains addresses of resources.
The upper limit rank storage unit 1023 stores a rank upper limit value.
Here, the "rank upper limit value" means a threshold value that is used as a standard for judging whether or not a rank indicated by the rank information output from the external apparatuses 120 and 121 is unreasonably high. If a rank indicated by the rank information output from the external apparatuses 120 and 121 is higher than the threshold value, the control unit 102 rejects an access to an access target by the external apparatuses. If a rank indicated by the rank information output from the external apparatuses 120 and 121 is equal to or lower than the threshold value, the access control unit 1021 performs the above-described access control onto an access to an access target by the external apparatuses.

The program update request register 1024 holds an update request flag that indicates whether or not a program update request has been received from any of the external apparatuses 120 and 121 and the internal CPU 103.
The control unit 102 monitors the update request flag held by the program update request register 1024, and if the update request flag indicates that a program update request has been received, instructs the internal CPU 103 to execute an update program.

The internal CPU 103, upon receiving the above-described instruction from the control unit 102, reads the update program from the update program storage area 1052 in the secret information storage unit 105 that will be described later, and executes a program update process as will be described later.
The encryption calculation unit 104 includes a data input unit 1041, a calculation processing unit 1042, and a data output unit 1043.

The data input unit 1041 includes a register for storing data, and receives various types of data, such as a program, a context of the program, and a hash value, that are output from the external apparatuses 120 and 121 and the internal CPU 103.
The calculation processing unit 1042 includes a key data storage unit for storing key data that is used to encrypt or decrypt data, and encrypts or decrypts data that is input from the data input unit 1041, using the key data stored in the key data storage unit, and outputs the encrypted or decrypted data to the data output unit 1043.

The data output unit 1043 includes a register for storing the encrypted or decrypted data received from the calculation processing unit 1042, and outputs the received data to the outside via the internal CPU 103 or the external interface 101.
The secret information storage unit 105 includes a calculation program storage area 1051, an update program storage area 1052, and a save area 1053.

The calculation program storage area 1051 is a storage area for storing a program for achieving the functions of the secret information processing apparatus 100, and for storing a context of the program.

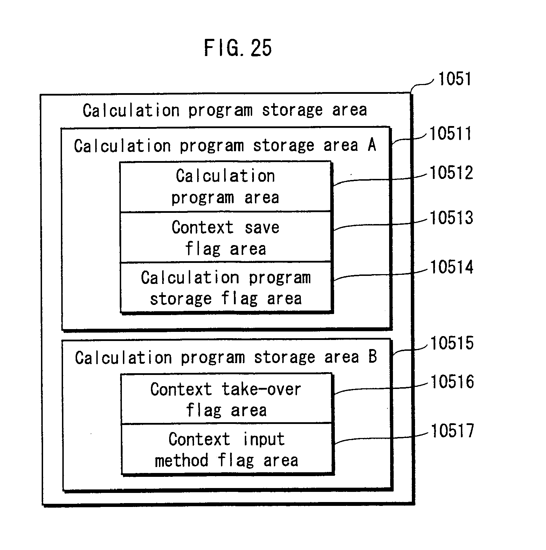

Fig. 25 shows the structure of the calculation program storage area 1051. The calculation program storage area 1051 includes a calculation program storage area A 10511 and a calculation program storage area B 10515. The calculation program storage area A 10511 includes a calculation program area 10512, a context save flag area 10513, and a calculation program storage flag area 10514. The calculation program storage area B 10515 includes a context take-over flag area 10516 and a context input method flag area 10517.

The calculation program area 10512 is an area for storing a program for achieving the functions of the secret information processing apparatus 100, and for storing a context of the program. The context save flag area 10513 is an area for storing a context save flag. The calculation program storage flag area 10514 is an area for storing a calculation program storage flag.

Here, the "context save flag" means a flag that indicates a method of processing a context of a program for achieving the functions of the pre-update secret information processing apparatus 100 (hereinafter referred to as "pre-update program"), in a-program update process that will be described later.
Also, the "calculation program storage flag" means a flag that indicates whether or not a pre-update program and a context thereof are stored in the calculation program area 10512, in the program update process that will be described later.

The context take-over flag area 10516 is an area for storing a context take-over flag. The context input method flag area 10517 is an area for storing a context input method flag.
Here, the "context take-over flag" means a flag that indicates whether or not a program (hereinafter referred to as "post-update program"), which achieves the functions of the secret information processing apparatus 100, is generated by changing part or all of a pre-update program, and replaces the pre-update program in the program update process that will be described later, should take over the context of the pre-update program.

Here, "take over" means that the post-update program shares the context of the pre-update program with the pre-update program.
Also, the "context input method flag" means a flag that indicates a method of inputting the context of the post-update program, in the program update process that will be described later.
The update program storage area 1052 is a storage area storing an update program for executing a program update process for the program stored in the calculation program storage area 1051.

The save area 1053 is a storage area for temporarily storing the context of the program stored in the calculation program storage area 1051.
The external apparatus 120 includes a CPU 1201. When the external apparatus 120 tries to access the secret information processing apparatus 100, the external apparatus 120 outputs the rank information and an address of an access target to the external interface 101. When the requested access is permitted, the external apparatus 120 performs transmission/reception of various types of data with the access target in the secret information processing apparatus 100.

Also, the external apparatus 120 acquires an encrypted first generation hash value and an encrypted concatenated hash value, which will be described later, fromoutside, and inputs the acquired values into the secret information processing apparatus 100.
It should be noted here that the encrypted first generation hash value and the encrypted concatenated hash value are created in the external environment.
The encrypted first generation hash value is created by encrypting a concatenated value of a hash value of a pre-update program and a hash value of a post-update program, using an encryption key.

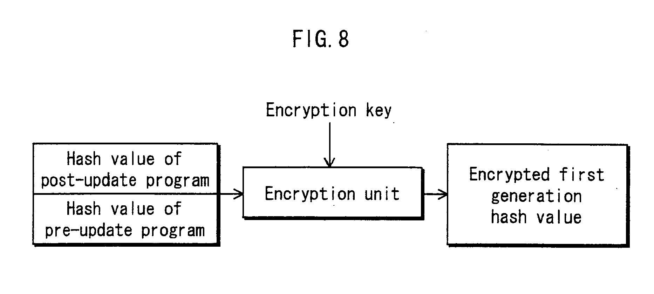

Fig. 8 is a schematic diagram of a process of creating the encrypted first generation hash value.
The encrypted concatenated hash value is created by encrypting a concatenated value of a multiple generation hash value, which will be described later, and a hash value of a post-update program.
More specifically, the "encrypted concatenated hash value" is an encrypted hash value that is created by concatenating a hash value of a most recently updated program with a hash value (hereinafter referred to as "multiple generation hash value") that is calculated based on the hash values of each of a plurality of programs having been updated a plurality of times starting from an initial program for achieving the functions of the secret information processing apparatus 100, and encrypting the concatenated hash value using the encryption key.

More specifically, the multiple generation hash value is calculated in the following procedures.
First, a hash value of an initial program (hereinafter referred to as "first generation program") is concatenated with a hash value of a program after the first update (hereinafter referred to as "second generation program"), and a hash calculation is performed on the concatenated hash value. This provides a first multiple generation hash value. After this, the first multiple generation hash value is concatenated with a hash value of a program after the second update (hereinafter referred to as "third generation program"), and a hash calculation is performed on the concatenated hash value. This provides a second multiple generation hash value. The multiple generation hash value is updated by the second multiple generation hash value. In this way, each time a program is updated, a multiple generation hash value is calculated by repeating the above-described procedures, and the multiple generation hash value is updated by the newly calculated one.

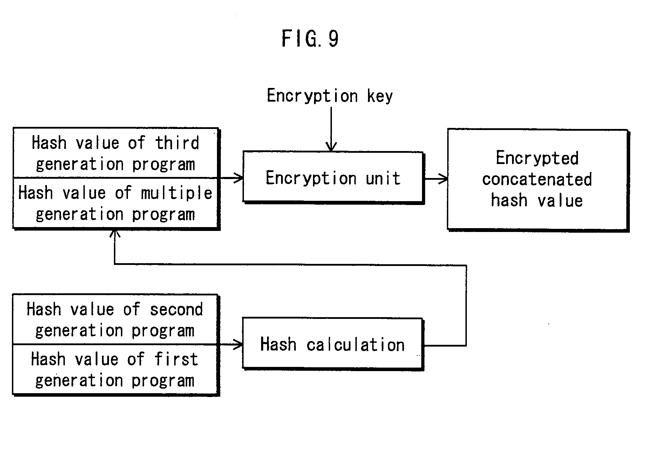

Fig. 9 is a schematic diagram of a process of creating the encrypted concatenated hash value.
The external apparatus 121 includes a Digital Signal Processor (DSP) 1211. When the external apparatus 121 tries to access the secret information processing apparatus 100, the external apparatus 121 outputs the rank information and an address of an access target to the external interface 101. When the requested access is permitted, the external apparatus 121 performs transmission/reception of various types of data with the access target in the secret information processing apparatus 100.

### <Operation>

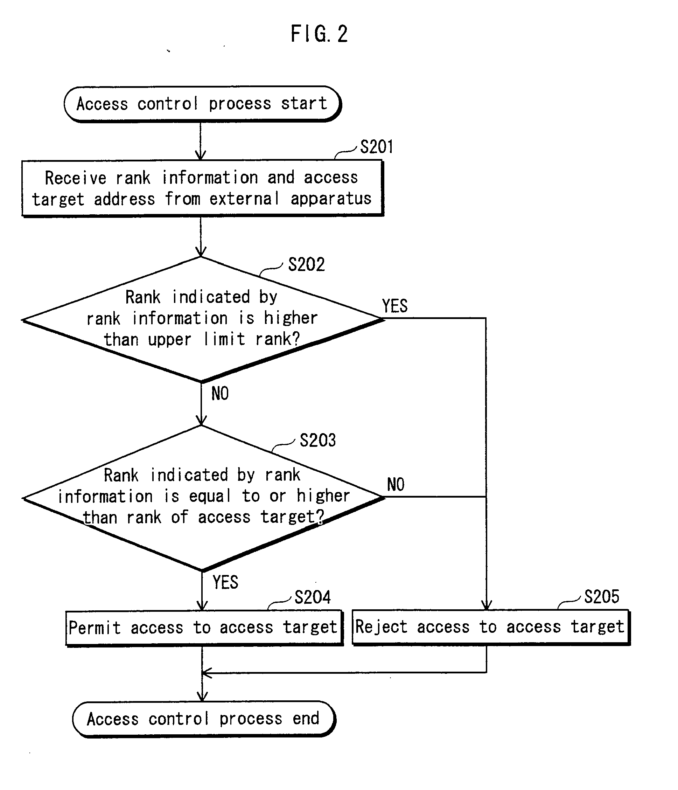

Next, the operation of the secret information processing apparatus 100 in the access control process will be described. Fig. 2 is a flowchart showing the procedures of the access control process. Now, the operation in the access control process will be described with reference to the flowchart shown in Fig. 2.
The control unit 102 receives the rank information and an address of an access target from the external apparatus 120 or 121 via the external interface 101 (step S201), and makes a comparison to judge whether or not the rank indicated by the rank information is higher than the rank upper limit value stored in the upper limit rank storage unit 1023 (step S202).

If the rank indicated by the rank information is higher than the rank upper limit value (Yes in step S202), the control unit 102 rejects the access to the access target by the external apparatus (step S205).
If the rank indicated by the rank information is not higher than the rank upper limit value (No in step S202), the control unit 102 further judges whether or not the rank indicated by the rank information is equal to or higher than the rank of the access target resource, by referring to the rank correspondence table stored in the access control unit 1021 (step S203).

If the rank indicated by the rank information is equal to or higher than the rank of the access target resource (Yes in step S203), the control unit 102 permits the access to the access target (step S204). If the rank indicated by the rank information is lower than the rank of the access target resource (No in step S203), the control unit 102 performs the process of step S205.
It should be noted here that the secret information processing apparatus 100 performs the above-described steps of the process onto the internal CPU 103, as well, except for step S202.

A specific example of the above-described access control process will be described here, presuming that rank 2 is assigned to the external apparatus 120, rank 1 is assigned to the external apparatus 121, rank 2 is stored in the upper limit rank storage unit 1023, and in the rank correspondence table, ranks are assigned to the resources as shown in Fig. 3. In step S201, the control unit 102 receives the rank information and the address of the program update request register 1024, which is the access target, from both the external apparatuses 120 and 121. In step S202, the control unit 102 makes a comparison to judge whether or not the rank indicated by the rank information is higher than the rank upper limit value stored in the upper limit rank storage unit 1023.

Since the ranks of the external apparatuses 120 and 121 are not higher than the rank upper limit value (No in step S202), the control unit 102 goes to step S203 and judges whether or not the rank of the external apparatus 120 (rank "2") is equal to or higher than the rank of the program update request register 1024 being the access target resource (rank"2"), and judges whether or not the rank of the external apparatus 121 (rank "1") is equal to or higher than the rank of the program update request register 1024 (rank "2"). Since the rank of the external apparatus 120 is equal to the rank of the program update request register 1024 (Yes in step S203), the control unit 102 permits the external apparatus 120 to access the program update request register 1024. On the other hand, since the rank of the external apparatus 121 is lower than the rank of the program update request register 1024 (No in step S203), the control unit 102 rejects the external apparatus 121 to access the program update request register 1024 (step S205).

With such operations, it is possible to detect and reject an unauthorized access from outside preliminarily. At the same time, since higher ranks are assigned to resources with higher levels of secrecy, it is possible to restrict an access from outside to a resource with a higher level of secrecy, while permitting an access from outside to a required resource. With this structure, upon receiving a request to access a resource in the secret information processing apparatus 100 from outside, it is possible to achieve an effective access control in terms of protecting secrecy.

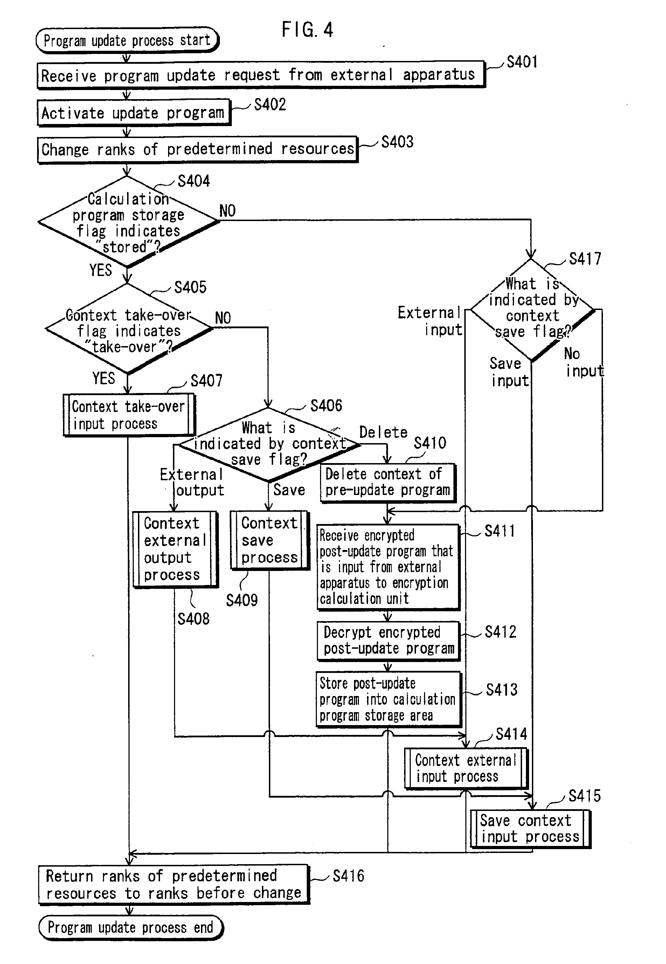

Next, the operation of the program update process performed by the secret information processing apparatus 100 will be described. Fig. 4 is a flowchart showing the procedures of the program update process. The operation will be described with reference to the flowchart shown in Fig. 4.
Upon receiving a program update request via the external interface 101 from the external apparatus 120, which was permitted to access the program update request register 1024 in the access control process shown in Fig. 2 (step S401), the program update request register 1024 modifies the update request flag to indicate that a program update request was received (hereinafter referred to as indicating "Yes").

When the update request flag is updated to indicate "Yes", the internal CPU 103 activates an update program stored in the update program storage area 1052, in accordance with the update program execution instruction received from the control unit 102 (step S402). Then, when it is permitted to access the access control unit 1021 in the access control process shown in Fig. 2, the internal CPU 103 changes ranks of predetermined resources shown in the rank correspondence table of the access control unit 1021 (in the present example, the data input unit 1041, the calculation processing unit 1042, and the data output unit 1043 of the encryption calculation unit 104) (step S403).

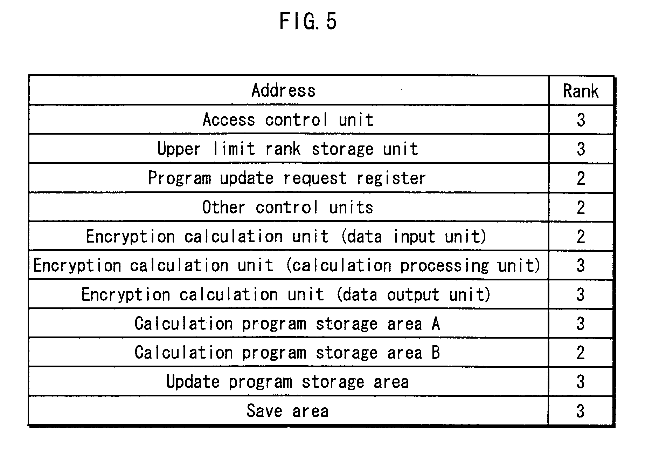

Fig. 3 shows a specific example of the rank correspondence table before the change in step S403. Fig. 5 shows a specific example of the rank correspondence table after the change in step S403.
Next, when it is permitted to access the calculation program storage area 1051 in the access control process shown in Fig. 2 , the internal CPU 103 judges whether or not a calculation program storage flag stored in the calculation program storage area 1051 indicates "stored" (step S404).

If the calculation program storage flag stored in the calculation program storage area 1051 indicates "stored" (Yes in step S404), the internal CPU 103 judges whether or not a context take-over flag stored in the calculation program storage area 1051 indicates "take-over" (step S405).
If the context take-over flag stored in the calculation program storage area 1051 indicates "take-over" (Yes in step 5405), the internal CPU 103 performs the context take-over input process which will be described later (step S407). After the completion of this process, when it is permitted to access the access control unit 1021 in the access control process shown in Fig. 2, the internal CPU 103 returns the ranks of the predetermined resources in the rank correspondence table of the access control unit 1021, to the ranks before the change in step S403 (step S416).

If the calculation program storage flag stored in the calculation program storage area 1051 does not indicate "stored" (No in step S404), the internal CPU 103 detects the input method that is indicated by a context input method flag stored in the calculation program storage area 1051 (step S417).
If it is detected that the context input method flag indicates an external input, the internal CPU 103 performs the context external input process which will be described later (step S414), and after the completion of this step, performs the process of step S416.

If it is detected that the context input method flag indicates a save input, the internal CPU 103 performs the save context input process which will be described later (step S415), and after the completion of this step, performs the process of step S416.
If it is detected that the context input method flag indicates no input, the internal CPU 103 goes to step S411 which will be described later.

If the context take-over flag does not indicate "take-over" (No in step S405), the internal CPU 103 detects the method of processing the context of the pre-update program, that is indicated by a context save flag stored in the calculation program storage area 1051 (step S406).
If it is detected that the context save flag indicates an external output, the internal CPU 103 performs the context external output process which will be described later (step S408), and after the completion of this step, performs the process of step S414.

If it is detected that the context save flag indicates a save, the internal CPU 103 performs the context save process which will be described later (step S409), and after the completion of this step, performs the process of step S415.
If it is detected that the context save flag indicates a delete, the internal CPU 103 deletes the context of the pre-update program stored in the calculation program storage area 1051 (step S410).

When the encryption calculation unit 104 receives an encrypted post-update program that is input from the external apparatus 120, which was permitted to access the data input unit 1041 in the access control process shown in Fig. 2, to the data input unit 1041 (step S411), the calculation processing unit 1042 decrypts the encrypted post-update program (step S412), and outputs the decrypted post-update program to the data output unit 1043.

When it is permitted to access the data output unit 1043 in the access control process shown in Fig. 2, the internal CPU 103 receives the decryptedpost-update program from the data output unit 1043, and when it is permitted to access the calculation program storage area 1051 in the access control process shown in Fig. 2, the internal CPU 103 stores the post-update program into the calculation program storage area 1051 (step S413), and performs the process of step S416.

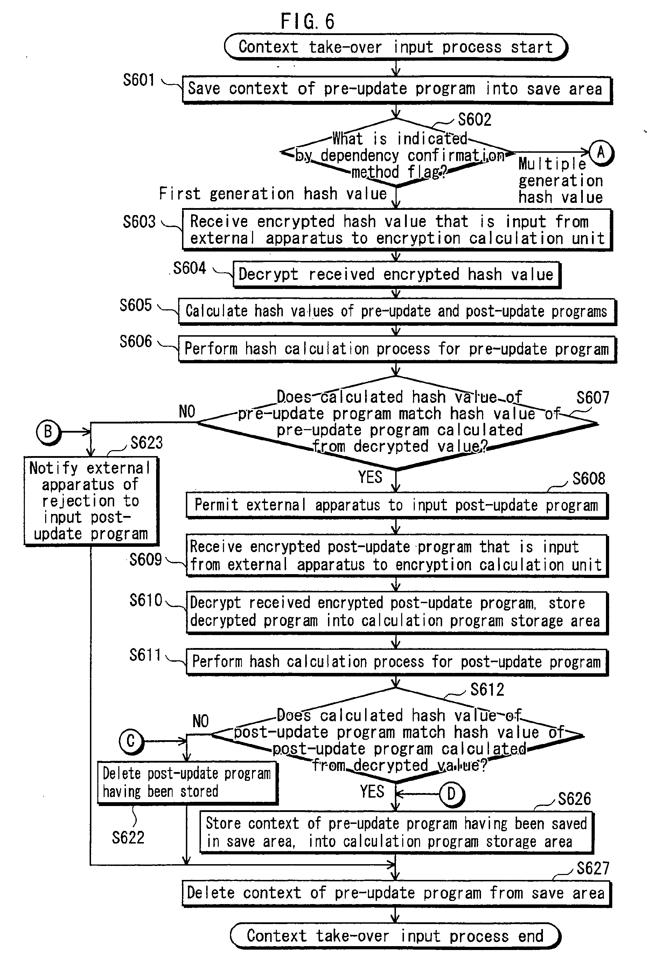

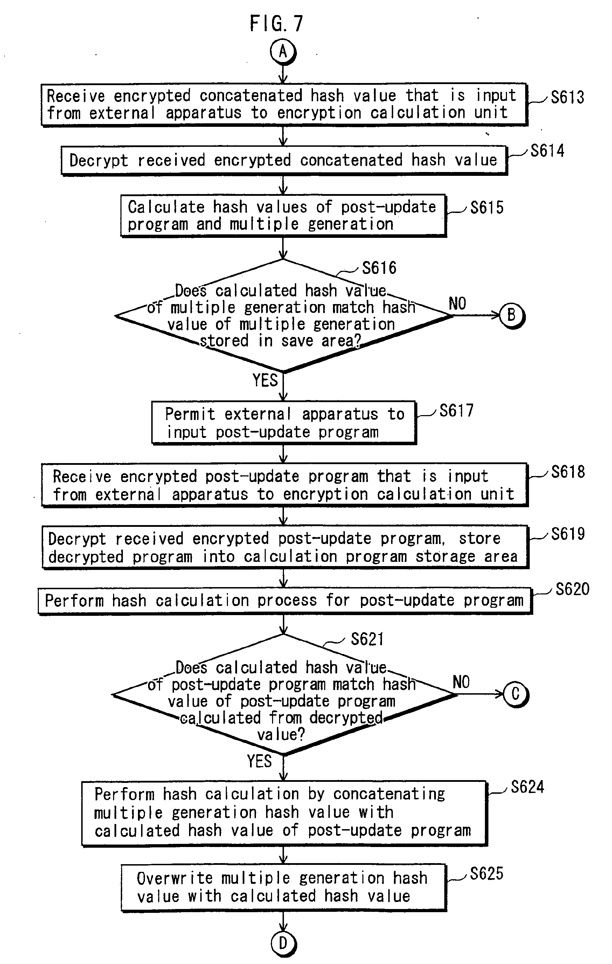

Next, the operation of the secret information processing apparatus 100 in the context take-over input process will be described. Figs. 6 and 7 are flowcharts showing the procedures of the context take-over input process. Now, the operation in the context take-over input process will be described with reference to the flowchart shown in Fig. 6.
When it is permitted to access the save area 1053 in the access control process shown in Fig. 2, the internal CPU 103 saves the context of the pre-update program, which is stored in the calculation program storage area 1051, into the save area 1053 (step S601), and when it is permitted to access the calculation program storage area 1051 in the access control process shown in Fig. 2, the internal CPU 103 detects the dependency confirmation method that is indicated by a dependency confirmation method flag contained in the pre-update program stored in the calculation program storage area 1051 (step S602).

If it is detected that the dependency confirmation method flag indicates a confirmation method by the first generation hash value, the encryption calculation unit 104 receives, via the external interface 101, an encrypted first generation hash value that is input from an external apparatus (in the present example, the external apparatus 120) permitted to access the data input unit 1041 in the access control process shown in Fig. 2, to the data input unit 1041 (step S603). The calculation processing unit 1042 decrypts the received encrypted first generation hash value (step S604), calculates hash values of the pre-update and post-update programs (step S605), and outputs the calculated hash values to the data output unit 1043.

Then, when it is permitted to access the calculation program storage area 1051 in the access control process shown in Fig. 2, the internal CPU 103 performs the hash calculation process for the pre-update program stored in the calculation program storage area 1051 (step S606). Then, when it is permitted to access the data output unit 1043 in the access control process shown in Fig. 2, the internal CPU 103 receives the calculated hash value of the pre-update program from the data output unit 1043, and judges whether or not the hash values of the pre-update programs calculated in step S605 and step S606 match each other (step S607).

If it is judged that the two hash values match each other in step S607 (Yes in step S607), the internal CPU 103 notifies the external apparatus 120 of the permission to input the post-update program, via the external interface 101 (step S608).
Next, the encryption calculation unit 104 receives, via the external interface 101 from the external apparatus 120 having been permitted to access the data input unit 1041 in the access control process shown in Fig. 2, the encrypted post-update program that is input to the data input unit 1041 (step S609). The calculation processing unit 1042 decrypts the received encrypted post-update program, and outputs the decrypted program to the data output unit 1043.

Then, when it is permitted to access the data output unit 1043 in the access control process shown in Fig. 2, the internal CPU 103 receives the decrypted post-update program from the data output unit 1043, and when it is permitted to access the calculation program storage area 1051 in the access control process shown in Fig. 2, the internal CPU 103 stores the received post-update program into the calculation program storage area 1051 (stepS610), performs the hash calculation process for the post-update program (step S611), and judges whether or not the hash values of the post-update programs calculated in step S605 and step S611 match each other (step S612).

If it is judged that the two hash values match each other in step S612 (Yes in step S612), and when the internal CPU 103 is permitted to access the save area 1053 in the access control process shown in Fig. 2, the internal CPU 103 reads the context of the pre-update program that was saved in the save area 1053 in step S601, and when the internal CPU 103 is permitted to access the calculation program storage area 1051 in the access control process shown in Fig. 2, the internal CPU 103 stores the context of the pre-update program into the calculation program storage area 1051 (step S626), and when the internal CPU 103 is permitted to access the save area 1053 in the access control process shown in Fig. 2, the internal CPU 103 deletes the context of the pre-update program from the save area 1053 (step S627).

If it is judged that the two hash values do not match each other in step S612 (No in step S612), and when the internal CPU 103 is permitted to access the calculation program storage area 1051 in the access control process shown in Fig. 2, the internal CPU 103 deletes the post-update program from the calculation program storage area 1051 (step S622), and performs the process of step S627.
If it is judged that the two hash values do not match each other in step S607 (No in step S607), the internal CPU 103 notifies the external apparatus 120 of the rejection to input the post-update program, via the external interface 101 (step S623), and performs the process of step S627.

If it is detected in step S602 that the dependency confirmation method flag indicates a confirmation method by the multiple generation hash value, which is created by concatenating the hash values of the initial program through the most recently updated program, the encryption calculation unit 104 receives, via the external interface 101, an encrypted concatenated hash value that is input from the external apparatus 120, which was permitted to access the data input unit 1041 in the access control process shown in Fig. 2, to the data input unit 1041 (step S613) . The calculation processing unit 1042 decrypts the received encrypted concatenated hash value (step S614), calculates a multiple generation hash value and a hash value of the post-update program (step S615), and outputs the calculated hash values to the data output unit 1043.

Next, when the internal CPU 103 is permitted to access the data output unit 1043 in the access control process shown in Fig. 2 , the internal CPU 103 receives the calculated multiple generation hash value and hash value of the post-update program from the data output unit 1043, and when the internal CPU 103 is permitted to access the save area 1053 in the access control process shown in Fig. 2, the internal CPU 103 reads the multiple generation hash value that has been preliminarily stored in the save area 1053, and judges whether or not the calculated multiple generation hash value matches the multiple generation hash value preliminarily stored in the save area (step S616).

If it is judged that the calculated multiple generation hash value matches the multiple generation hash value preliminarily stored in the save area (Yes in step S616), the internal CPU 103 notifies the external apparatus 120 of the permission to input the post-update program, via the external interface 101 (step S617).
Then, the encryption calculation unit 104 receives the encrypted post-update program that is input from the external apparatus 120, which was permitted to access the data input unit 1041 in the access control process shown in Fig. 2, to the data input unit 1041 (step S618). The calculation processing unit 1042 decrypts the encrypted post-update program, and outputs the decrypted post-update program to the data output unit 1043.

Next, when the internal CPU 103 is permitted to access the data output unit 1043 in the access control process shown in Fig. 2, the internal CPU 103 receives the decrypted post-update program from the data output unit 1043, and when the internal CPU 103 is permitted to access the calculation program storage area 1051 in the access control process shown in Fig. 2, the internal CPU 103 stores the received post-update program into the calculation program storage area 1051 (step S619), performs the hash calculation process for the post-update program (step S620), and judges whether or not the hash values of the post-update programs calculated in step S615 and step S620 match each other (step S621).

If it is judged that the hash values match each other in step S621 (Yes in step S621), and when the internal CPU 103 is permitted to access the save area 1053 in the access control process shown in Fig. 2, the internal CPU 103 concatenates the multiple generation hash value, which is stored in the save area 1053, with the hash value of the post-update program calculated in step S620, and performs the hash calculation using the result of the concatenation to obtain a hash value (step S624), replaces the multiple generation hash value stored in the save area 1053 with the hash value obtained in step S624 (step S625), and moves to step S626.

If it is judged that the hash values do not match each other in step S616 (No in step S616), the internal CPU 103 moves to step S623.
If it is judged that the hash values do not match each other in step S621 (No in step S621), the internal CPU 103 moves to step S622.
Next, the context external output process performed by the secret information processing apparatus 100 will be described.

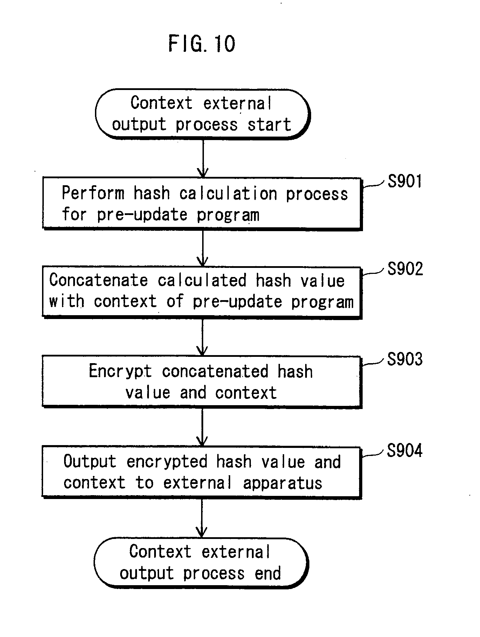

Fig. 10 is a flowchart showing the procedures of the context external output process. Now, the procedures of the context external output process will be described with reference to the flowchart of Fig. 10.
When the internal CPU 103 is permitted to access the calculationprogram storage area 1051 in the access control process shown in Fig. 2, the internal CPU 103 performs the hash calculation process for the pre-update program stored in the calculation program storage area 1051 (step S901), and when the internal CPU 103 is permitted to access the data input unit 1041 in the access control process shown in Fig. 2, the internal CPU 103 concatenates the calculated hash value with the context of the pre-update program stored in the calculation program storage area 1051 (step S902), and outputs the result to the encryption calculation unit 104.

The calculation processing unit 1042 of the encryption calculation unit 104 encrypts the concatenated hash value and context (step S903), and outputs the result to the data output unit 1043.
When the internal CPU 103 is permitted to access the data output unit 1043 in the access control process shown in Fig. 2, the internal CPU 103 receives the decrypted concatenated hash value and context from the data output unit 1043, and outputs the encrypted hash value and context to the external apparatus 120 via the external interface 101 (step S904).

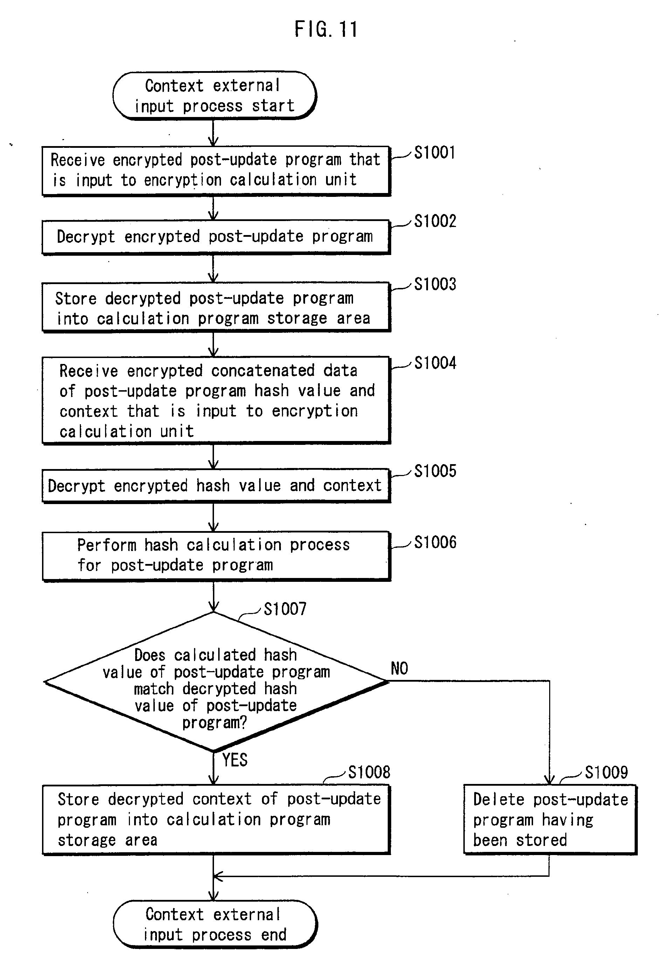

Next, the context external input process performed by the secret information processing apparatus 100 will be described. Fig. 11 is a flowchart showing the procedures of the context external input process. Now, the procedures of the context external input process will be described with reference to the flowchart of Fig. 11.
When an encrypted post-update program is input from the external apparatus 120, which was permitted to access the data input unit 1041 in the access control process shown in Fig. 2, to the data input unit 1041 of the encryption calculation unit 104 (step S1001), the calculation processing unit 1042 decrypts the encrypted post-update program (step S1002), and outputs the decrypted post-update program to the data output unit 1043.

When the internal CPU 103 is permitted to access the data output unit 1043 in the access control process shown in Fig. 2, the internal CPU 103 receives the decrypted post-update program from the data output unit 1043, and stores it into the calculation program storage area 1051 (step S1003).
Further, when an encrypted concatenated hash value and context of the post-update program is input from the external apparatus 120, which was permitted to access the data input unit 1041 in the access control process shown in Fig. 2, to the data input unit 1041 of the encryption calculation unit 104 (step S1004), the calculation processing unit 1042 decrypts the encrypted concatenated data (step S1005), and outputs the decrypted concatenated data to the data output unit 1043.

Then, when the internal CPU 103 is permitted to access the calculation program storage area 1051 in the access control process shown in Fig. 2, the internal CPU 103 performs the hash calculation process for the post-update program stored in the calculation program storage area 1051 (step S1006) . Then, when the internal CPU 103 is permitted to access the data output unit 1043 in the access control process shown in Fig. 2, the internal CPU 103 receives the decrypted hash value of the post-update program from the data output unit 1043, and judges whether or not the calculated hash value matches the decrypted hash value of the post-update program (step S1007).

If it is judged that the two hash values match each other in step S1007 (Yes in step S1007), the internal CPU 103 receives the context of the decrypted post-update program from the data output unit 1043, and when the internal CPU 103 is permitted to access the calculation program storage area 1051 in the access control process shown in Fig. 2, the internal CPU 103 stores the decrypted context of the post-update program into the calculation program storage area 1051 (step S1008). If it is judged that the two hash values do not match each other in step S1007 (No in step S1007), and when the internal CPU 103 is permitted to access the calculation program storage area 1051 in the access control process shown in Fig. 2, the internal CPU 103 deletes the post-update program from the calculation program storage area 1051 (step S1009).

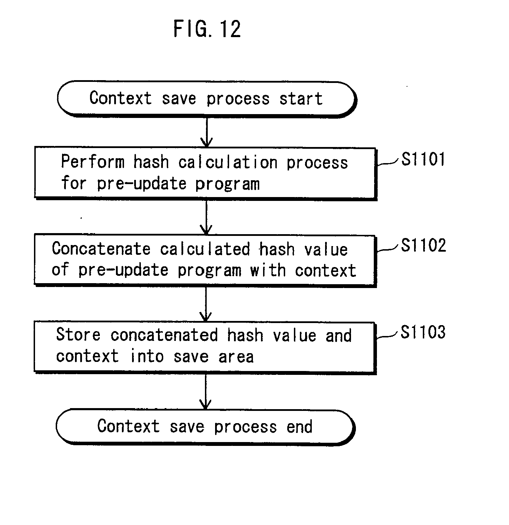

Next, the context save process performed by the secret information processing apparatus 100 will be described. Fig. 12 is a flowchart showing the procedures of the context save process. Now, the procedures of the context save process will be described with reference to the flowchart of Fig. 12.
The internal CPU 103 performs the hash calculation process for the pre-update program stored in the calculation program storage area 1051 (step S1101), concatenates the calculated hash value with the context of the pre-update program stored in the calculation program storage area 1051 (step S1102), and when the internal CPU 103 is permitted to access the save area 1053 in the access control process shown in Fig. 2, the internal CPU 103 stores the concatenated hash value and context into the save area 1053 (step S1103).

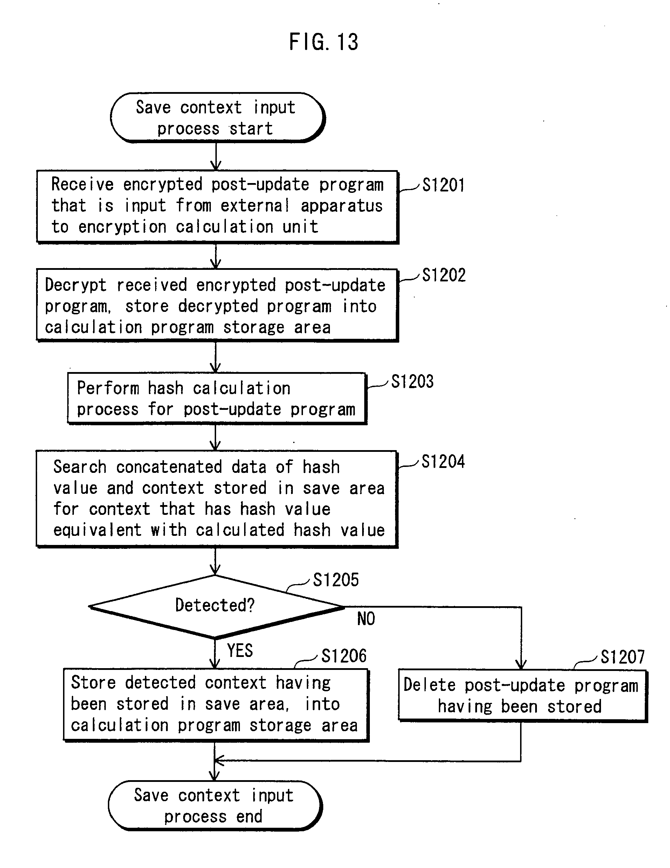

Next, the save context input process performed by the secret information processing apparatus 100 will be described. Fig. 13 is a flowchart showing the procedures of the save context input process. Now, the procedures of the save context input process will be described with reference to the flowchart of Fig. 13.
The encryption calculation unit 104 receives an encrypted post-update program that is input from the external apparatus 120, which was permitted to access the data input unit 1041 in the access control process shown in Fig. 2, to the data input unit 1041 (step S1201) . Then the calculation processing unit 1042 decrypts the encrypted post-update program, and outputs the decrypted post-update program to the data output unit 1043.

When the internal CPU 103 is permitted to access the data output unit 1043 in the access control process shown in Fig. 2, the internal CPU 103 receives the decrypted post-update program from the data output unit 1043, and when the internal CPU 103 is permitted to access the calculation program storage area 1051 in the access control process shown in Fig. 2, the internal CPU 103 stores the received post-update program into the calculation program storage area 1051 (step S1202), performs the hash calculation process for the post-update program (step S1203), and when the internal CPU 103 is permitted to access the save area 1053 in the access control process shown in Fig. 2, the internal CPU 103 searches the concatenated data of hash value and context stored in the save area 1053 for the context that has the hash value equivalent with the calculated hash value (step S1204), and judges whether or not the context was detected (step S1205).

If it is judged that the context was detected in step S1205 (Yes in step S1205), the internal CPU 103 reads the context of the concatenated hash value and context from the save area 1053, and when the internal CPU 103 is permitted to access the calculation program storage area 1051 in the access control process shown in Fig. 2, the internal CPU 103 stores the read context into the calculation program storage area 1051 (step S1206). If it is judged that the context was not detected in step S1205 (No in step S1205), and when the internal CPU 103 is permitted to access the calculation program storage area 1051 in the access control process shown in Fig. 2, the internal CPU 103 deletes the post-update program from the calculation program storage area 1051 (step S1207).

### <Embodiment 2

In Embodiment 1, it conf irmed based on the hash value whether or not a context input from outside or a context saved into the save area 1053 is applicable to the post-update program in the context take-over input process, context external input process, and save context input process. In Embodiment 2, this is confirmed based on a chain value which will be described later.

The following description centers on the differences from Embodiment 1 in the function and operation of the secret information processing apparatus 100.

### <Structure>

A secret information processing apparatus 150 in Embodiment 2 has the same structure as the secret information processing apparatus 100 in Embodiment 1, except that a chain value of the pre-update program is stored in the save area 1053. Accordingly, description of the structure of the secret information processing apparatus 150 is omitted.

It should be noted here that the "chain value" means a value that is indicated by encrypted text data that is obtained by encrypting plain text data, and is used when the plain text data is encrypted next time. In the present example, each time a program for achieving the functions of the secret information processing apparatus 150 is updated, the chain value is updated to a value that is indicated by the encrypted updated program.
In the following description, the initial program for achieving the functions of the secret information processing apparatus 150 is referred to as the first generation program, the program after the first update is referred to as the second generation program, and the program after the second update is referred to as the third generation program, and so on.

### <Operation>

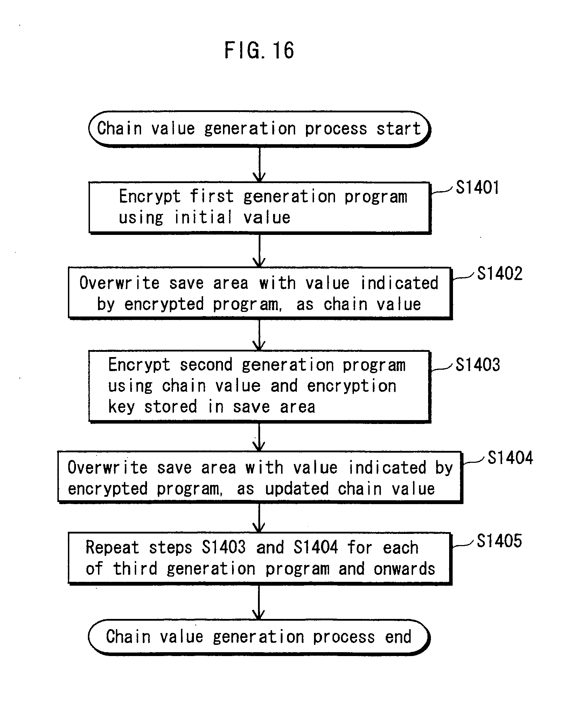

Fig. 16 is a flowchart showing the procedures of the chain value generation process in which the secret information processing apparatus 150 stores a chain value in the save area 1053, and updates the stored chain value.

The chain value generation process will be described with reference to Fig. 16.
The encryption calculation unit 104 obtains, from the internal CPU 103, the initial value of the chain value stored in the save area 1053, and the first generation program stored in the calculation program storage area 1051, and encrypts the first generation program using the obtained initial value and an encryption key (step S1401).

When the internal CPU 103 is permitted to access the data output unit 1043 in the access control process shown in Fig. 2, the internal CPU 103 receives an encrypted first generation program from the data output unit 1043, and when it is permitted to access the save area 1053 in the access control process shown in Fig. 2, the internal CPU 103 overwrites the initial value stored in the save area 1053 with a value (as a chain value) that is indicated by the encrypted first generation program (step S1402).

The encryption calculation unit 104 then obtains, from the internal CPU 103, the second generation program stored in the calculation program storage area 1051, and the updated chain value stored in the save area 1053, and encrypts the second generation program using the obtained chain value and the encryption key (step S1403).
When the internal CPU 103 is permitted to access the data output unit 1043 in the access control process shown in Fig. 2, the internal CPU 103 receives the encrypted second generation program from the data output unit 1043, and when it is permitted to access the save area 1053 in the access control process shown in Fig. 2, the internal CPU 103 overwrites the chain value stored in the save area 1053 with a value (as a chain value) that is indicated by the encrypted second generation program (step S1404).
The steps S1403 and S1404 are repeated for each of the third generation program and onwards (step S1405).

It should be noted here that the above-described chain value generation process may be performed preliminarily by an external apparatus (excluding the external apparatuses 120 and 121), not by the secret information processing apparatus 150, and the chain value generated in this process may be stored in the save area 1053.

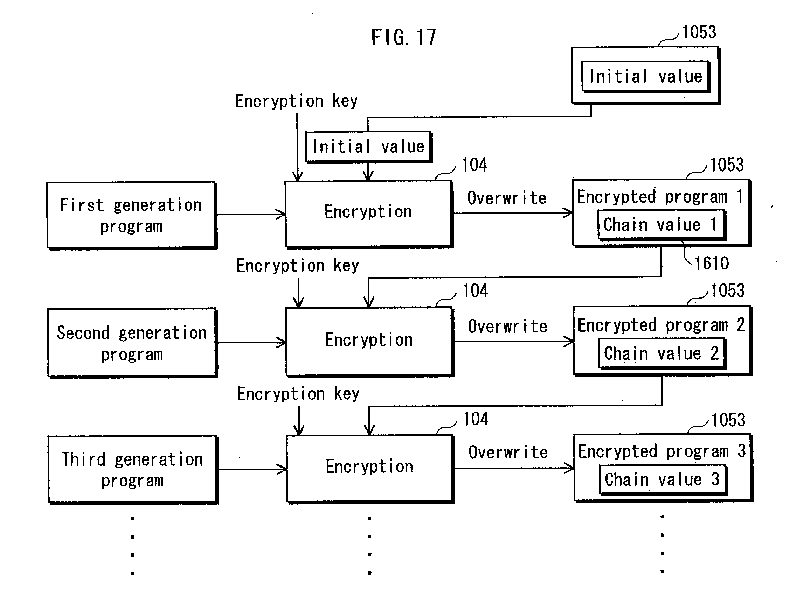

Fig. 17 is schematic diagram showing how the chain value is updated in accordance with the above-described procedures.

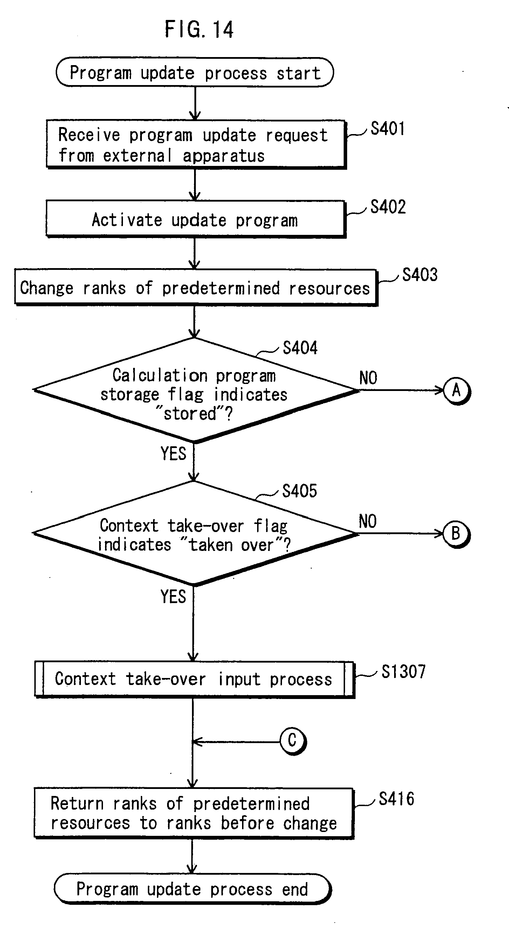

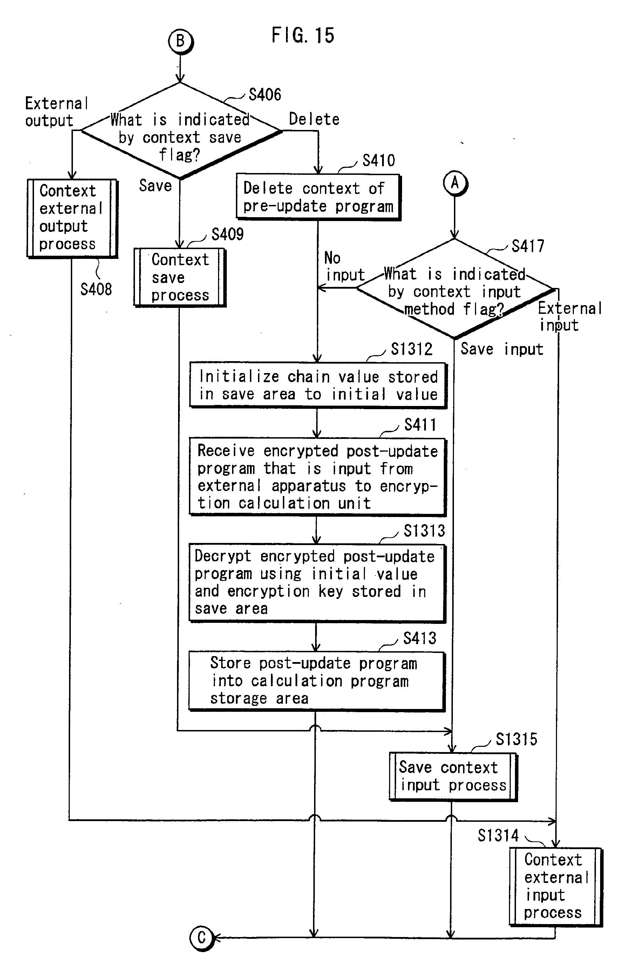

Figs. 14 and 15 are flowcharts showing the procedures of the program update process performed by the secret information processing apparatus 150, where the steps being the same as those in the program update process shown in Fig. 4 of Embodiment 1 have the same step numbers.

The following will describe the steps S1312, S1313, the context take-over input process (step S1307), the context external input process (step S1314), and the save context input process (step S1315) that are performed in differently from the secret information processing apparatus 100.
First, the steps S1312, S1313 will be described.

After step S410 in Fig. 15, or if it is detected in step S417 that the context input method flag indicates "delete", and when the internal CPU 103 is permitted to access the save area 1053 in the access control process shown in Fig. 2, the internal CPU 103 initialize the chain value stored in the save area 1053 to the initial value (step S1312).
In the encryption calculation unit 104, after step S411, the calculation processing unit 1042 decrypts the received encrypted post-update program using the initial value and the encryption key stored in the save area 1053 (step S1313).

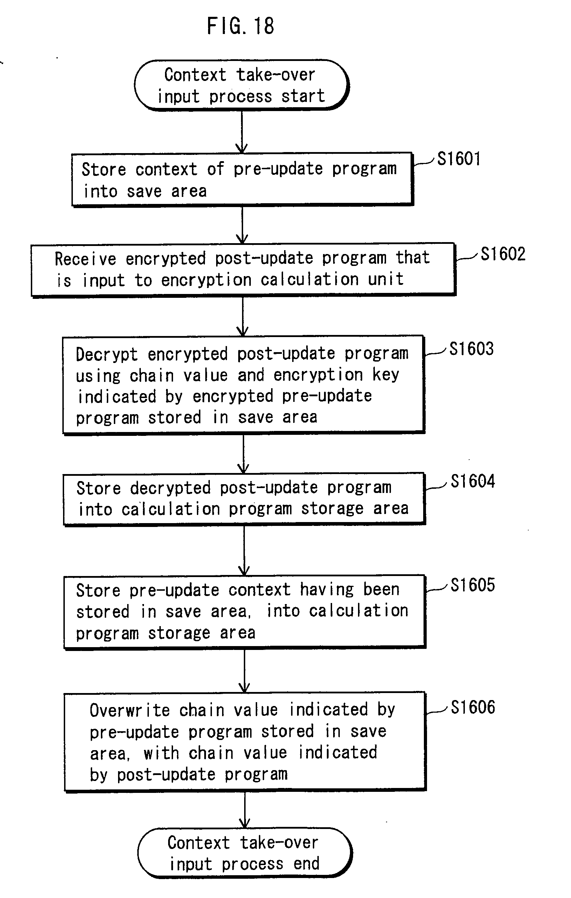

Next, the context take-over input process performed by the secret information processing apparatus 150 will be described. Fig. 18 is a flowchart showing the procedures of the context take-over input process.
When the internal CPU 103 is permitted to access the save area 1053 in the access control process shown in Fig. 2, the internal CPU 103 stores, namely saves, the context of the pre-update program, which is stored in the calculation program storage area 1051, into the save area 1053 (step S1601).

Next, the encryption calculation unit 104 receives the encrypted post-update program, which was encrypted by using the encryption key and the chain value indicated by the encrypted pre-update program and is input to the data input unit 1041 via the external interface 101 from the external apparatus 120 permitted to access the data input unit 1041 in the access control process shown in Fig. 2 (step S1602) The calculation processing unit 1042 then decrypts the received encrypted post-update program using the encryption key and the chain value indicated by the encrypted pre-update program stored in the save area 1053 (step S1603), and outputs the decrypted post-update program to the data output unit 1043.

When the internal CPU 103 is permitted to access the calculation program storage area 1051 in the access control process shown in Fig. 2, the internal CPU 103 receives the decrypted post-update program from the data output unit 1043, and stores it in the calculation program storage area 1051 (step S1604), and when the internal CPU 103 is permitted to access the save area 1053 in the access control process shown in Fig. 2, the internal CPU 103 reads the context of the pre-update program from the save area 1053, and when the internal CPU 103 is permitted to access the calculation program storage area 1051 in the access control process shown in Fig. 2, the internal CPU 103 stores the read context into the calculationprogram storage area 1051 (step S1605) . When the internal CPU 103 is permitted to access the save area 1053 in the access control process shown in Fig. 2, the internal CPU 103 overwrites the chain value indicated by the pre-update program stored in the save area 1053, with the chain value indicated by the encrypted post-update program (step S1606).

Next, the context external input process performed by the secret information processing apparatus 150 will be described.

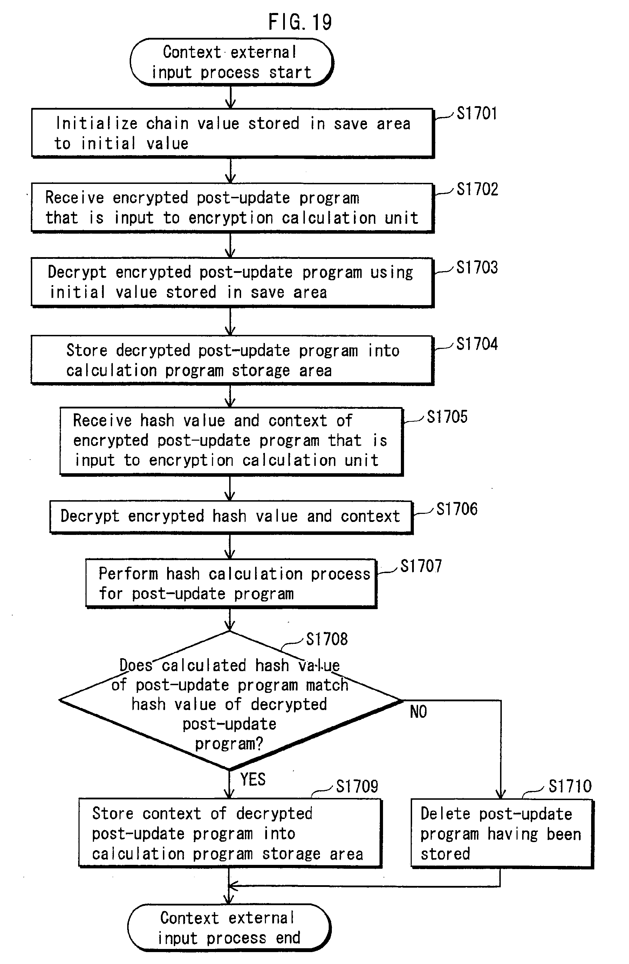

Fig. 19 is a flowchart showing the procedures of the context external input process. Now, the operation in the context external input process will be described with reference to the flowchart shown in Fig. 19.
When the internal CPU 103 is permitted to access the save area 1053 in the access control process shown in Fig. 2, the internal CPU 103 initializes the chain value indicated by the encrypted pre-update program stored in the save area 1053, to an initial value (step S1701).

Next, the encryption calculation unit 104 receives the encrypted post-update program, which was encrypted by using the encryption key and the chain value indicated by the encrypted pre-update program and is input to the data input unit 1041 via the external interface 101 from the external apparatus 120 permitted to access the data input unit 1041 in the access control process shown in Fig. 2 (step S1702). The calculation processing unit 1042 then decrypts the received encrypted post-update program using the encryption key and the initial value stored in the save area 1053 (step S1703), and outputs the decrypted post-update program to the data output unit 1043.

When the internal CPU 103 is permitted to access the data output unit 1043 in the access control process shown in Fig. 2, the internal CPU 103 receives the decrypted post-update program from the data output unit 1043, and when the internal CPU 103 is permitted to access the calculation program storage area 1051 in the access control process shown in Fig. 2, stores the decrypted post-update program into the calculation program storage area 1051 (step S1704).

Next, the encryption calculation unit 104 receives the concatenated data of hash value and context of the encrypted post-update program, which was encrypted by using the encryption key and the chain value indicated by the encrypted pre-update program and is input to the data input unit 1041 via the external interface 101 from the external apparatus 120 permitted to access the data input unit 1041 in the access control process shown in Fig. 2 (step S1705). The calculation processing unit 1042 then decrypts the received concatenated data of hash value and context of the post-update program, using the encryption key and the initial value stored in the save area 1053 (step S1706), and outputs the decrypted post-update program to the data output unit 1043.

When the internal CPU 103 is permitted to access the calculationprogram storage area 1051 in the access control process shown in Fig. 2, the internal CPU 103 performs the hash calculation process for the post-update program stored in the calculation program storage area 1051 (step S1707), and when the internal CPU 103 is permitted to access the data output unit 1043 in the access control process shown in Fig. 2, the internal CPU 103 receives the hash value of the decrypted post-update program from the data output unit 1043, and judges whether or not the calculated hash value and the hash value of the decrypted post-update program match each other (step S1708).

If it is judged in step S1708 that the two hash values match each other (Yes in step S1708), the internal CPU 103 receives the context of the decrypted post-update program from the data output unit 1043, and when the internal CPU 103 is permitted to access the calculation program storage area 1051 in the access control process shown in Fig. 2, the internal CPU 103 stores the context of the post-update program into calculation program storage area 1051 (step S1709). If it is judged in step S1708 that the two hash values do not match each other (No in step S1708), the internal CPU 103, when it is permitted to access the calculation program storage area 1051 in the access control process shown in Fig. 2, deletes the post-update program from the calculation program storage area 1051 (step S1710).

Next, the save context input process performed by the secret information processing apparatus 150 will be described.

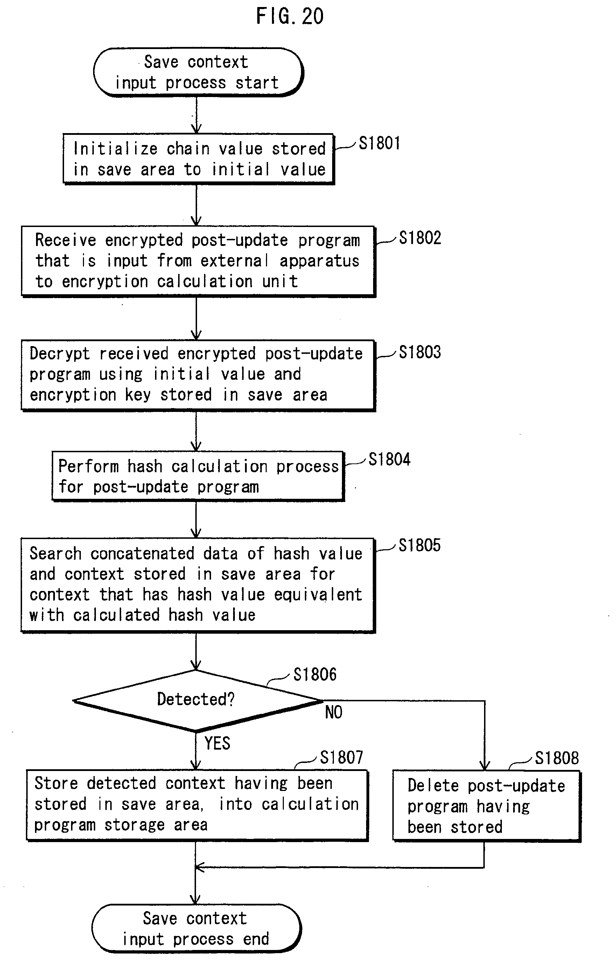

Fig. 20 is a flowchart showing the procedures of the save context input process. Now, the operation in the save context input process will be described with reference to the flowchart shown in Fig. 20.
When the internal CPU 103 is permitted to access the save area 1053 in the access control process shown in Fig. 2, the internal CPU 103 initializes the chain value indicated by the encrypted pre-update program stored in the save area 1053, to an initial value (step S1801).

Next, the encryption calculation unit 104 receives the encrypted post-update program, which was encrypted by using the encryption key and the chain value indicated by the encrypted pre-update program and is input to the data input unit 1041 via the external interface 101 from the external apparatus 120 permitted to access the data input unit 1041 in the access control process shown in Fig. 2 (step S1802). The encryption calculation unit 104 then obtains the initial value stored in the save area 1053 from the internal CPU 103, and the calculation processing unit 1042 decrypts the received encrypted post-update program using the obtained initial value and the encryption key (step S1803), and outputs the decrypted post-update program to the data output unit 1043.

When the internal CPU 103 is permitted to access the data output unit 1043 in the access control process shown in Fig. 2, the internal CPU 103 receives the decrypted post-update program from the data output unit 1043, and when the internal CPU 103 is permitted to access the calculation program storage area 1051 in the access control process shown in Fig. 2, the internal CPU 103 stores the post-update program into the calculation program storage area 1051 and performs the hash calculation process for the post-update program (step S1804), and when the internal CPU 103 is permitted to access the save area 1053 in the access control process shown in Fig. 2, the internal CPU 103 searches the concatenated data of hash value and context stored in the save area 1053 for a context that has a hash value that is equivalent with the calculated hash value (step S1805), and judges whether or not the context was detected (step 51806).

If it is judged that the context was detected in step S1806 (Yes in step S1806), the internal CPU 103 reads the context of the concatenated hash value and context from the save area 1053, and when the internal CPU 103 is permitted to access the calculation program storage area 1051 in the access control process shown in Fig. 2, the internal CPU 103 stores the read context into the calculation program storage area 1051 (step S1807). If it is judged that the context was not detected in step S1806 (No in step S1806), and when the internal CPU 103 is permitted to access the calculation program storage area 1051 in the access control process shown in Fig. 2, the internal CPU 103 deletes the post-update program from the calculation program storage area 1051 (step S1808).

### <Embodiment 3>

In Embodiments 1 and 2, the pre-update program is updated by inputting the post-update program from outside into the secret information processing apparatus (the secret information processing apparatus 100 or 150). In Embodiment 3, the pre-update and post-update programs are stored in different banks in the storage unit of the secret information processing apparatus, and the program update process is performed by switching between the banks from outside.

The following description centers on the differences from Embodiment 1.

### <Structure>

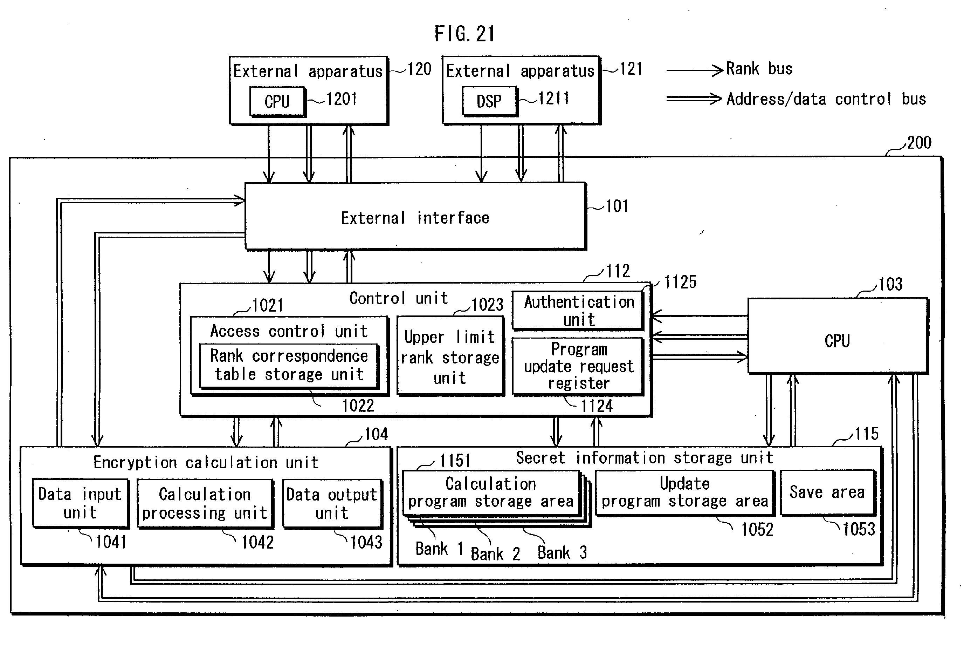

Fig. 21 is a functional block diagram showing the structure of a secret information processing apparatus 200 in Embodiment 3. In Fig. 21, constituent elements that are also included in the secret information processing apparatus 100 of Embodiment 1 are assigned with the same reference numbers. As shown in Fig. 21, the secret information processing apparatus 200 differs from the secret information processing apparatus 100 in the structure of a control unit 112 and a secret information storage unit 115.

The control unit 112 differs from the control unit 102 of the secret information processing apparatus 100 in Embodiment 1 in that the control unit 112 includes an authentication unit 1125, and in the function of a program update request register 1124.
The authentication unit 1125, upon receiving an authentication request from the external apparatus 120 via the external interface 101, performs an authentication process, and notifies the authentication result to the external apparatus 120 via the external interface 101.
The program update request register 1124 receives bank information from the external apparatus 120, whose authenticity has been confirmed by the authentication unit 1125, and stores the received bank information, where the bank information specifies a bank which is provided in a calculation program storage area 1151 of the secret information storage unit 115 and in which the post-update program is stored.

The secret information storage unit 115 differs from the secret information storage unit 105 of the secret information processing apparatus 100 in Embodiment 1 in the function of a calculation program storage area 1151. The calculation program storage area 1151 is divided into a plurality of banks in each of which a pre-update program or a post-update program is stored. The structure of the calculation program storage area 1151 is the same as the structure shown in Fig. 25.

It should be noted here that a plurality of post-update programs may be provided, not limited to one post-update program.

### <Operation>

In the access control process of Embodiment 1, as shown in Fig. 2, if the rank indicated by the rank information is higher than the rank upper limit value (Yes in step S202), the control unit 102 rejects the access to the access target by the external apparatus (step S205). In the access control process of Embodiment 3, if the rank indicated by the rank information is higher than the rank upper limit value (Yes in step S202), the control unit 112 of the secret information processing apparatus 200 regards the rank indicated by the rank information as the upper limit value, and performs the process of step S203.

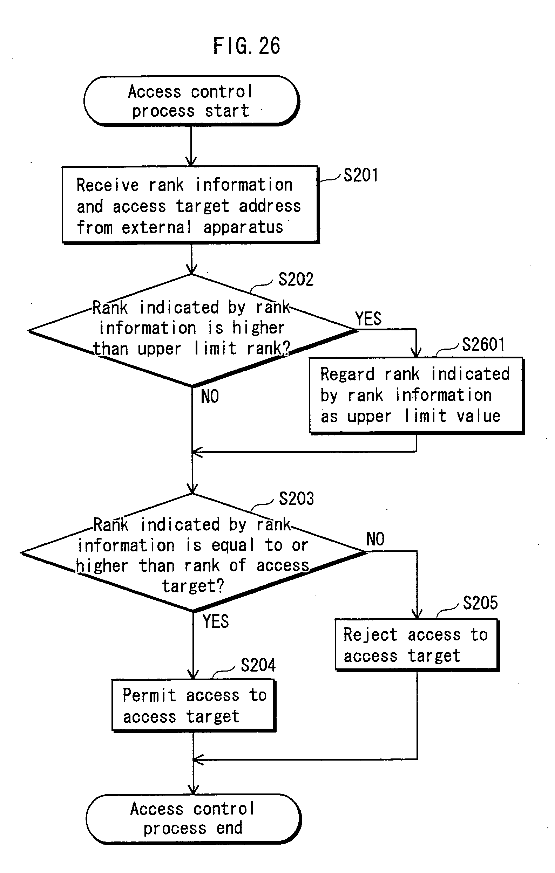

Fig. 26 is a flowchart showing the procedures of the access control process that is performed by the secret information processing apparatus 200. In Fig. 26, the steps being the same as those shown in Fig. 2 have the same step numbers. The access control process shown in Fig. 26 differs from that shown in Fig. 2 in that it includes step S2601 in which the control unit 112 regards the rank indicated by the rank information as the upper limit value.

Next, the program update process performed by the secret information processing apparatus 200 will be described.

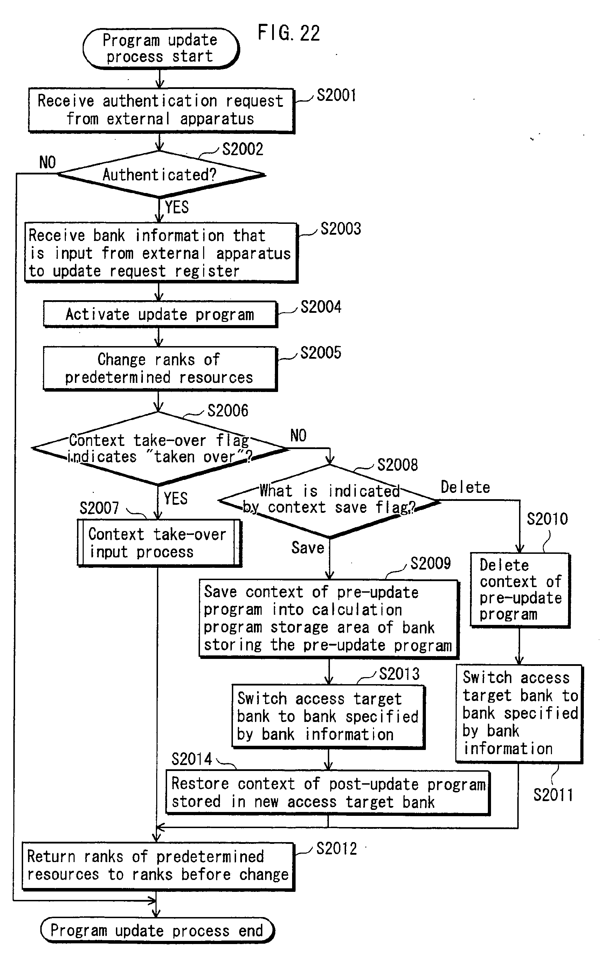

Fig. 22 is a flowchart showing the procedures of the program update process. Now, the operation in the program update process will be described with reference to the flowchart shown in Fig. 22.
The authentication unit 1125 of the control unit 112, upon receiving an authentication request via the external interface 101 from the external apparatus 120, which has been permitted to access the authentication unit 1125 in the access control process shown in Fig. 26 (step S2001), performs the authenticationprocess, and judges whether or not the external apparatus 120 was authenticated (step S2002).

If it is judged in step S2002 that the external apparatus 120 was authenticated (Yes in step S2002), the program update request register 1124 receives the bank information that is input via the external interface 101 from the external apparatus 120, which has been permitted to access the program update request register 1124 in the access control process shown in Fig. 26 (step S2003), and stores the bank information.
After the bank information is stored in the program update request register 1124, the internal CPU 103, when it is permitted to access the update program storage area 1052 in the access control process shown in Fig. 26, activates the update program stored in the update program storage area 1052 in accordance with an instruction from the control unit 112 to execute the update program (step S2004). When the internal CPU 103 is permitted to access the access control unit 1021 in the access control process shown in Fig. 26, the internal CPU 103 changes the ranks of predetermined resources (in the present example, the rank of the program update request register 1124) (step S2005), and when the internal CPU 103 is permitted to access the calculation program storage area 1151 in the access control process shown in Fig. 26, the internal CPU 103 judges whether or not the context take-over flag stored in the bank, in which the pre-update program is stored, indicates "taken over" (step S2006).

If it is judged in step S2006 that the context take-over flag indicates "taken over" (Yes in step S2006), the internal CPU 103 performs the context take-over input process (step S2007) . After the process is completed, and when the internal CPU 103 is permitted to access the access control unit 1021 in the access control process shown in Fig. 26, the internal CPU 103 returns the ranks of the predetermined resources, which were changed in step S2005 and stored in the access control unit 1021, to the ranks before the change (step S2012).

If it is judged in step S2006 that the context take-over flag does not indicate "taken over" (No in step S2006), the internal CPU 103 judges as to what is indicated by the context save flag, which shows how to process the context of the pre-update program (step S2008).
If it is judged in step S2008 that the context save flag indicates "save", the internal CPU 103 saves the context of the pre-update program into the bank (step S2009), switches the access target bank to the bank specified by the bank information stored in the program update request register 1124 (step S2013), restores the context of the post-update program stored in the new access target bank (step S2014), and performs the process of step S2012.

If it is judged in step S2008 that the context save flag indicates "delete", the internal CPU 103 deletes the context of the pre-update program (step S2010), and performs the process of step S2011.
If it is judged in step S2002 that the external apparatus 120 was not authenticated (No in step S2002), the internal CPU 103 ends the program update process.

Next, the context take-over input process performed by the secret information processing apparatus 200 will be described.

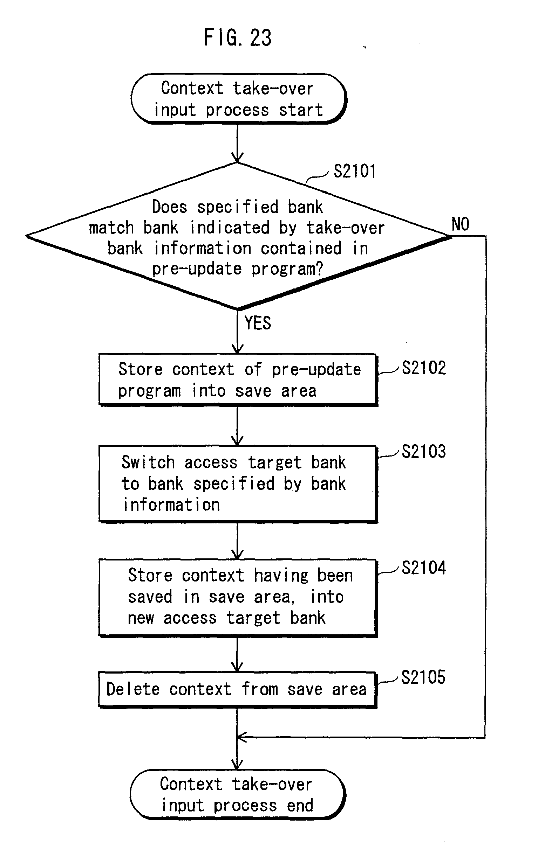

Fig. 23 is a flowchart showing the procedures of the context take-over input process. Now, the operation in the context take-over input process will be described with reference to the flowchart shown in Fig. 23.
When the internal CPU 103 is permitted to access the program update request register 1124 in the access control process shown in Fig. 26, the internal CPU 103 judges whether or not the bank specified by the bank information stored in the program update request register 1124 matches any of the banks indicated by the take-over bank information contained in the pre-update program (step S2101).

It should be notedhere that the "take-overbank information" is information that indicates one or more banks in each of which a post-update program that can take over the context of the pre-update program is stored.
If it is judged in step S2101 that the bank specified by the bank information stored in the program update request register 1124 matches any of the banks indicated by the take-over bank information contained in the pre-update program (Yes in step S2101), the internal CPU 103, when it is permitted to access the calculation program storage area 1151 in the access control process shown in Fig. 26, reads the context of the pre-update program from a bank in the calculation program storage area 1151, and when it is permitted to access the save area 1053 in the access control process shown in Fig. 26, saves the read context into the save area 1053 (step S2102), switches the access target bank to the bank specified by the bank information stored in the program update request register 1124 (step S2103), reads the context of the pre-update program from the save area 1053 , and when it is permitted to access the calculation program storage area 1151 in the access control process shown in Fig. 26, stores the read context into the new access target bank (step S2104), and when it is permitted to access the save area 1053 in the access control process shown in Fig. 26, deletes the context of the pre-update program having been saved in the save area 1053 (step S2105).

### <Supplementary Notes>

Up to now, the secret information processing apparatus 100, 150, and 200 of the present invention have been described through the embodiments thereof. However, the present invention is not limited to the embodiments, but may be modified in various ways, for example, as follows.

(1) In the above-described Embodiments 1-3, the internal CPU 103 can access the update program storage area 1052 regardless of before or after the execution of the program update process. However, it is possible to perform a control so that the internal CPU 103 can access the update program storage area 1052 only during the execution of the program update process, by changing, before or after the execution of the program update process, the rank set in the internal CPU 103.

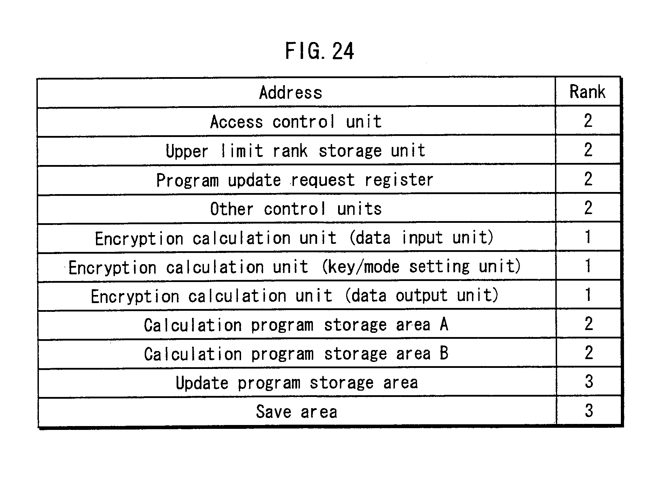

More specifically, the rank correspondence table is set as shown in Fig. 24 before the execution of the program update process, wherein the rank of the internal CPU 103 is set to 2, the rank of the external apparatus 120 is set to 2, the rank of the external apparatus 121 is set to 1, and the rank stored in the upper limit rank storage unit 1023 is set to 2. Then, when an update request is sent from the external apparatus 120 to the program update request register 1024 or to the program update request register 1124, the control unit 102 or the control unit 112 changes the rank of the internal CPU 103 to 3. With such an arrangement, the above-described control can be realized.

With the above-stated structure, it is possible to restrict the access to the update program storage area 1052 when the program update process is not executed. This enhances the secrecy concerning the program update process.
Also, in the above-stated example, the external apparatus 120 can directly access the calculation program storage area 1051 or the calculation program storage area 1151, which makes it possible to store the post-update program into the calculation program storage area 1051 or the calculation program storage area 1151 directly without use of the internal CPU 103. This reduces the load on the secret information processing apparatus in performing the program update process.

(2) In the above -described Embodiments 1-3, three levels of ranks are indicated by the rank information. However, not limited to the three levels, four or more levels of ranks may be indicated.
(3) In the above-described Embodiments 1-3, the rank information is input or output via the dedicated bus. However, the rank information may be input or output via the data bus.
(4) In the above-described Embodiments 1-3, the secret information processing apparatus 100, 150, or 200 may be implemented in one LSI together with the external apparatuses 120 and 121. Also, each of these apparatuses may be implemented in a different LSI.

(5) In the above-described Embodiments 1-3, the access control unit 1021 of the control unit 102 or 112 performs the access control based on the ranks over the whole apparatus. However, each of the encryption calculation unit 104, the secret information storage unit 105, and the secret information storage unit 115 may be provided with an independent access control unit that performs the access control based on the ranks.
(6) In the above-described Embodiments 1-3, the ranks set in the external apparatuses 120 and 121 may be fixed, or may be changeable.

(7) In the above-described Embodiment 3, the context is saved into each bank. However, the save area 1053 may be provided with a context storage area corresponding to the save area 1053, and the context may be saved into the save area 1053.

### Industrial Applicability

The present invention can be used as a secret control technology for updating a program for realizing the functions of a secret information processing apparatus, in the apparatus without leaking information.

## Claims

1. A secret information processing apparatus for controlling accesses to resources therein from external apparatuses, the secret information processing apparatus comprising:
a level storage unit storing access control levels that are assigned to the resources and are used as a standard in judging whether or not to permit an access to any of the resources from any of the external apparatuses;
a program storage unit storing an update target program;
a receiving unit operable to receive, from one of the external apparatuses, a request to update the update target program;
an update unit operable to perform an update process for updating the update target program if the receiving unit receives the request;
an access control unit operable to determine whether or not to permit accesses to the resources from the external apparatus, in accordance with the access control levels corresponding to the resources; and
a level changing unit operable to change, during the update process performed by the update unit, access control levels of resources, which are to be accessed by the update unit during the update process and whose access control levels indicate that accesses from the external apparatus are permitted, to levels indicating that accesses from the external apparatus are not permitted.

2. The secret information processing apparatus of Claim 1, wherein
the level changing unit returns the access control levels that were changed during the update process, to the access control levels before the change, after the update process.

3. The secret information processing apparatus of Claim 1, wherein
each access control level is represented by a rank,
the secret information processing apparatus further comprising
a level receiving unit operable to receive an access control level assigned to the external apparatus, from the external apparatus,
if a rank indicated by the received access control level is equal to or higher than a rank indicated by an access control level of a resource, the access control unit permits the external apparatus to access the resource, and
if the rank indicated by the received access control level is lower than the rank indicated by the access control level of the resource, the access control unit does not permit the external apparatus to access the resource.

4. The secret information processing apparatus of Claim 3, wherein
the receiving unit is one of the resources, and receives the update request only if the access control unit permits the external apparatus to access the receiving unit.

5. The secret information processing apparatus of Claim 3 further comprising
an upper limit value storage unit storing an upper limit value of the ranks, and
if the rank indicated by the received access control level of the external apparatus is higher than the upper limit value, the access control unit does not permit the external apparatus to access any of the resources.

6. The secret information processing apparatus of Claim 1 further comprising
an authenticationunit operable to perform an authentication of the external apparatus, and
if the authentication unit does not confirm an authenticity of the external apparatus through the authentication, the access control unit does not permit the external apparatus to access any of the resources.

7. The secret information processing apparatus of Claim 1 further comprising
a decryption unit operable to receive, from the external apparatus, an encrypted update program for the update target program, and decrypt the received encrypted update program to generate an update program,
the decryption unit includes
a data output sub-unit that is one of the resources that may be changed by the level changing unit, and is operable to output the update program generated by the decryption unit, and
the update unit performs the update process by accessing the data output sub-unit to receive the update program, and storing the received update program in the program storage unit.

8. The secret information processing apparatus of Claim 7, wherein
the program storage unit includes a program storage sub-unit and a save sub-unit,
the program storage sub-unit stores the update target program and a context of the update target program,
the update unit includes:
a take-over judging unit operable to judge whether or not the update program should take over the context of the update target program;
a save unit operable to save the context of the update target program into the save sub-unit if the take-over judging unit judges that the update program should take over the context; and
a hash value calculating unit operable to calculate a hash value of the update target program, wherein
the decryption unit further receives an encrypted hash value that is generated by encrypting the hash value of the update target program, decrypts the received encrypted hash value, and outputs a hash value generated by decrypting the encrypted hash value, to the data output sub-unit, and
the update unit receives the hash value, generated by the decryption unit, of the update target program from the data output sub-unit, and stores the update program and the context of the update target program in the program storage sub-unit only if the received hash value matches the calculated hash value.

9. The secret information processing apparatus of Claim 8, wherein
the decryption unit further receives, from the external apparatus, an encrypted hash value that is generated by encrypting a hash value of the update program, decrypts the received encrypted hash value, and outputs a hash value generated by decrypting the encrypted hash value, to the data output sub-unit,
the hash value calculating unit further calculates a hash value of the update program if a hash value of the received update target program matches the calculated hash value of the update target program, and
the update unit receives the hash value, generated by the decryptionunit, of the update program from the data output sub-unit, and stores the update program and the context of the update target program in the program storage sub-unit only if the received hash value of the update program matches the calculated hash value of the update program.

10. The secret information processing apparatus of Claim 8, wherein
the update unit further deletes the context of the update target program from the save sub-unit if the received hash value of the update target program does not match the calculated hash value of the update target program.

11. The secret information processing apparatus of Claim 10, wherein
the update unit further deletes the update program from the program storage unit if the received hash value of the update program does not match the calculated hash value of the update program.

12. The secret information processing apparatus of Claim 7, wherein
the program storage unit includes a program storage sub-unit and a save sub-unit,
the program storage sub-unit stores the update target program and a context of the update target program,
the save sub-unit stores a multiple generation hash value that is calculated based on hash values of each of a plurality of updated programs having been updated starting from an initial program up to the update target program,
the update unit includes:
a take-over judging unit operable to judge whether or not the update program should take over the context of the update target program; and
a save unit operable to save the context of the update target program into the save sub-unit if the take-over judging unit judges that the update program should take over the context, wherein
the decryption unit further receives, from the external apparatus, an encrypted hash value that is generated by encrypting a multiple generation hash value, decrypts the received encrypted hash value, and outputs a multiple generation hash value generated by decrypting the encrypted hash value, to the data output sub-unit, and
the update unit receives, from the data output sub-unit, the multiple generation hash value generated by the decryption unit, and stores the update program and the context of the update target program in the program storage sub-unit only if the received multiple generation hash value matches the multiple generation hash value stored in the save sub-unit.

13. The secret information processing apparatus of Claim 12, wherein
the decryption unit further receives an encrypted hash value that is generated by encrypting a hash value of the update program, decrypts the received encrypted hash value, and outputs a hash value generated by decrypting the encrypted hash value, to the data output sub-unit, and
the update unit further calculates a hash value of the update program by performing a hash calculation on the update program if the receivedmultiple generationhashvaluematches the multiple generation hash value stored in the save sub-unit, receives the hash value, generated by the decryption unit, of the update program from the data output sub-unit, and stores the update program and the context of the update target program in the program storage sub-unit only if the received hash value of the update program matches the calculated hash value of the update program.

14. The secret information processing apparatus of Claim 13, wherein
the update unit further concatenates the multiple generation hash value stored in the save sub-unit with the calculated hash value of the update program to generate a concatenated value, calculates a multiple generation hash value by performing the hash calculation on the concatenated value, and replaces the multiple generation hash value stored in the save sub-unit with the calculated multiple generation hash value.

15. The secret information processing apparatus of Claim 12, wherein
the update unit further deletes the context of the update target program from the save sub-unit if the received multiple generation hash value does not match the multiple generation hash value stored in the save sub-unit.

16. The secret information processing apparatus of Claim 15, wherein
the update unit further deletes the update program from the program storage unit if the received hash value of the update program does not match the calculated hash value of the update program.

17. The secret information processing apparatus of Claim 7, wherein
the program storage unit further stores a context of the update target program,
the update unit includes:
a take-over judging unit operable to judge whether or not the update program should take over the context of the update target program;
an output judging unit operable to judge whether or not to output the context if the take-over judging unit judges that the update program should not take over the context; and
a hash value calculating unit operable to calculate a hash value of the update target program if the output judging unit judges to output the context,
the secret information processing apparatus further comprising
an encryption unit operable to encrypt the calculated hash value and the context, wherein
the update unit concatenates the encrypted hash value with the encrypted context to generate a concatenated encrypted hash value and context and outputs the concatenated encrypted hash value and context to outside the secret information processing apparatus.

18. The secret information processing apparatus of Claim 7, wherein
the program storage unit includes a program storage sub-unit and a save sub-unit,
the program storage sub-unit stores the update target program and a context of the update target program,
the update unit includes:
a take-over judging unit operable to judge whether or not the update program should take over the context of the update target program;
a save judging unit operable to judge whether or not to save the context of the update target program into the save sub-unit if the take-over judging unit judges that the update program should not take over the context;
a hash value calculating unit operable to calculate a hash value of the update target program if the save judging unit judges to save the context; and
a save unit operable to concatenate the hash value with the context to generate a concatenated hash value and context and saves the concatenated hash value and context into the save sub-unit.

19. The secret information processing apparatus of Claim 7, wherein
the decryption unit further receives, from the external apparatus, an encrypted hash value of the update program and an encrypted context of the update program, and decrypts the received encrypted hash value and context to generate a hash value and a context,
the update unit includes:
a hash value calculating unit operable to calculate a hash value of the update program; and
a hash value judging unit operable to judge whether or not the calculated hash value of the update program matches the hash value of the update program generated by the decryption unit, wherein
the update unit stores the context generated by the decryption unit into the program storage unit as the context of the update program if the hash value judging unit judges that the calculated hash value matches the hash value generated by the decryption unit, and deletes the update program from the program storage unit if the hash value judging unit judges that the calculated hash value does not match the hash value generated by the decryption unit.

20. The secret information processing apparatus of Claim 7, wherein
the program storage unit includes a program storage sub-unit and a save sub-unit,
the program storage sub-unit stores the update program,
the save sub-unit stores a plurality of pieces of concatenated data each of which is generated by concatenating a context of an update program and a hash value of the update program,
the update unit includes:
a hash value calculating unit operable to calculate a hash value of the update program; and
a concatenated data judging unit operable to judge whether or not a piece of concatenated data having a same hash value as the calculated hash value is stored in the save sub-unit, wherein
if the concatenated data judging unit judges that the piece of concatenated data is stored, the update unit stores a context of an update program included in the piece of concatenated data, into the program storage sub-unit, and
if the concatenated data judging unit judges that the piece of concatenated data is not stored, the update unit deletes the update program from the program storage sub-unit.

21. The secret information processing apparatus of Claim 7,
wherein
the program storage unit includes a program storage sub-unit and a save sub-unit,
the program storage sub-unit stores the update target program and a context of the update target program,
the save sub-unit stores a chain value that is indicated by an encrypted update target program,
the update program is encrypted by using an encryption key and the chain value,
the update unit includes:
a take-over judging unit operable to judge whether or not the update program should take over the context of the update target program; and
a save unit operable to save the context of the update target program into the save sub-unit if the take-over judging unit judges that the update program should take over the context, wherein
the decryption unit further receives decrypts the update program received from the external apparatus, using the encryption key and the chain value stored in the save sub-unit, and outputs the decrypted update program to the data output sub-unit, and
the update unit receives the decrypted update program from the data output sub-unit, and stores the received update program and the context of the update target program in the program storage sub-unit.

22. The secret information processing apparatus of Claim 1, wherein
the program storage unit includes a bank storing the update target program and includes a bank storing an update program corresponding to the update target program, and
the update unit performs the update process by switching between the banks included in the program storage unit.

23. The secret information processing apparatus of Claim 22, wherein
the bank storing the update target program stores a context of the update target program,
the receiving unit receives, as the update request, bank information which specifies a bank that is to be switched and stores the update program,
the update unit includes:
a take-over judging unit operable to judge whether or not the update program should take over the context of the update target program; and
a bank switching unit operable to switch an access target bank included in the program storage unit, from the bank storing the update target program to the bank storing the update program, if the take-over judging unit judges that the update program should take over the context, wherein
the update unit stores the context of the update target program into the bank to which the bank switching unit switched.

24. The secret information processing apparatus of Claim 23, wherein
the update target program includes take-over bank information that specifies a bank storing an update program that corresponds to the update target program and can take over the context of the update target program,
the update unit includes
a take-over bank judging unit operable to judge whether or not the bank specified by the received bank information matches the bank specified by the take-over bank information, wherein
the bank switching unit switches the access target bank included in the program storage unit, from the bank storing the update target program to the bank storing the update program, if the take-over bank judging unit judges that the bank specified by the received bank information matches the bank specified by the take-over bank information.

25. The secret information processing apparatus of Claim 3,
wherein
each access control level is represented by one of three or more ranks.

26. The secret information processing apparatus of Claim 3 further comprising
an upper limit value storage unit storing an upper limit value of the ranks, and
if the rank indicated by the received access control level of the external apparatus is higher than the upper limit value, the access control unit judges whether or not to permit the external apparatus to access any of the resources by regarding the rank indicated by the received access control level as equivalent with the upper limit value.

27. A secret information processing method for use in a secret information processing apparatus for controlling accesses to resources therein from external apparatuses,
the secret information processing apparatus including:
a level storage unit storing access control levels that are assigned to the resources and are used as a standard in judging whether or not to permit an access to any of the resources from any of the external apparatuses; and
a program storage unit storing an update target program,
the secret information processing method comprising the steps of:
receiving, from one of the external apparatuses, a request to update the update target program;
performing an update process for updating the update target program if the request is received;
determining whether or not to permit accesses to the resources from the external apparatus, in accordance with the access control levels corresponding to the resources; and
changing, during the update process performed by the update unit, access control levels of resources, which are to be accessed by the update unit during the update process and whose access control levels indicate that accesses from the external apparatus are permitted, to levels indicating that accesses from the external apparatus are not permitted.

28. A program for causing a secret information processing apparatus, which controls accesses to resources therein from external apparatuses, to perform a secret information process,
the secret information processing apparatus including:
a level storage unit storing access control levels that are assigned to the resources and are used as a standard in judging whether or not to permit an access to any of the resources from any of the external apparatuses; and
a program storage unit storing an update target program,
the secret information process comprising the steps of:
receiving, from one of the external apparatuses, a request to update the update target program;
performing an update process for updating the update target program if the request is received;
determining whether or not to permit accesses to the resources from the external apparatus, in accordance with the access control levels corresponding to the resources; and
changing, during the update process performed by the update unit, access control levels of resources, which are to be accessed by the update unit during the update process and whose access control levels indicate that accesses from the external apparatus are permitted, to levels indicating that accesses from the external apparatus are not permitted.

29. A computer-readable recording medium recording therein a program for causing a secret information processing apparatus, which controls accesses to resources therein from external apparatuses, to perform a secret information process,
the secret information processing apparatus including:
a level storage unit storing access control levels that are assigned to the resources and are used as a standard in judging whether or not to permit an access to any of the resources from any of the external apparatuses; and
a program storage unit storing an update target program,
the secret information process comprising the steps of:
receiving, from one of the external apparatuses, a request to update the update target program;
performing an update process for updating the update target program if the request is received;
determining whether or not to permit accesses to the resources from the external apparatus, in accordance with the access control levels corresponding to the resources; and
changing, during the update process performed by the update unit, access control levels of resources, which are to be accessed by the update unit during the update process and whose access control levels indicate that accesses from the external apparatus are permitted, to levels indicating that accesses from the external apparatus are not permitted.
